# EUROPÄISCHE PATENTSCHRIFT

(11) **EP 3 870 995 B1**
(45) Veröffentlichungstag und Bekanntmachung des Hinweises auf die Patenterteilung: **02.11.2022**
(21) Anmeldenummer: 19783068.0
(22) Anmeldetag: 11.10.2019
(51) Int. Cl.: G01S 7/481, G01S 17/86, G01S 17/931, G02B 1/04, C08J 7/04, C08J 7/043, C08J 7/046, C08K 5/00

(54) **IR-TRANSPARENTES SENSOR- UND KAMERASYSTEM FÜR KRAFTFAHRZEUGE**
IR-TRANSPARENT SENSOR AND CAMERA SYSTEM FOR MOTOR VEHICLES
SYSTÈME DE CAPTEUR ET DE CAMÉRA TRANSPARENT AUX IR POUR VÉHICULES AUTOMOBILES

(30) Priorität: 23.10.2018 IT 201800009717
(43) Veröffentlichungstag der Anmeldung: 01.09.2021
(73) Patentinhaber: Covestro Intellectual Property GmbH & Co. KG, 51373 Leverkusen (DE)
(72) Erfinder: GROSSER, Ulrich, 51515 Kürten (DE); MEYER, Alexander, 40489 Düsseldorf (DE); PFINGST, Thomas, 47918 Tönisvorst (DE); CAPELLEN, Peter, 47803 Krefeld (DE); OSER, Rafael, 47800 Krefeld (DE); HAGEN, Rainer, 51377 Leverkusen (DE); SADLER, Tobias, 40789 Monheim am Rhein (DE); TARAVELLA, Vincenzo, 24035 Curno BG (IT); CROTTI, Andrea, 24035 Curno (IT); SCOTUZZI, Stefania, 24030 BREMBATE DI SOPRA BG (IT)
(74) Vertreter: Levpat
(86) Internationale Anmeldenummer: PCT/EP2019/077551
(87) Internationale Veröffentlichungsnummer: WO 2020/083661

(56) Entgegenhaltungen:
- US-A1- 2012 081 544
- US-A1- 2012 287 417
- US-A1- 2015 368 434

## Beschreibung

Die vorliegende Erfindung betrifft ein Sensor-System, umfassend: eine LiDAR-Einheit mit einem Sender für Laserlicht mit einer Wellenlänge von 800 nm bis 1600 nm und einem Empfänger für Licht mit einer Wellenlänge von 800 nm bis 1600 nm; eine Kamera für sichtbares Licht mit einer Wellenlänge von 380 nm bis 780 nm und eine Abdeckung, welche so angeordnet ist, dass von der LiDAR-Einheit ausgesandtes und von ihr empfangenes IR-Licht und von der Kamera empfangenes sichtbares Licht durch die Abdeckung hindurch tritt, wobei die Abdeckung eine Farbstoffe enthaltende Schicht umfasst. Die Erfindung betrifft ebenfalls ein Fahrzeug, welches ein solches Sensor-System aufweist.

Fahrerassistenzsysteme wie Notbremsassistenten, Spurassistenzsysteme, Verkehrszeichenerkennungssysteme, adaptive Geschwindigkeitssteuerungssysteme und Abstandshalter sind bekannt und werden in heutigen Fahrzeugen eingesetzt. Für die Umsetzung der genannten Funktionen werden Umgebungserfassungssensoren, die sich i.d.R. auf Radar-, LiDAR-, Ultraschall- und Kamerasensoren stützen, eingesetzt. Stereooptische Kamerasysteme sowie LiDAR-Sensoren sind insbesondere für hoch automatisiertes und autonomes Fahren wichtig, denn sie sind in der Lage, hochaufgelöste dreidimensionale Bilder der Fahrzeugumgebung vom Nah- bis Fernbereich zu liefern. Die in der vorliegenden Erfindung beschriebenen Substratmaterialien sind insbesondere für optische Kamerasysteme wie Mono- und Stereokamerasysteme und LiDAR-Sensoren geeignet. Ferner sind die Substratmaterialien für Radarsensoren geeignet.

Optische Kamerasysteme werden heute schon im Bereich der Fahrzeugsensorik, z.B. für Spurhalteassistenten, eingesetzt. Ein großer Vorteil der optischen Sensoren liegt darin, dass sie ein sehr genaues Abbild der Umgebung wiedergeben können, d.h. die Umgebung wird nicht punktuell erfasst, sondern großflächig abgebildet. Soll auch die Entfernung, z.B. zu einem vor dem Fahrzeug liegendem Gegenstand oder anderem Fahrzeug bestimmt werden, werden statt Monokameras mehrere Kameras wie Stereokameras eingesetzt. Statt eines rotierenden LiDAR-Systems können auch zwei oder weitere LiDAR-Sensoren eingesetzt werden. Durch Erfassung von mindestens zwei Bildern kann ein dreidimensionales Bild, z.B. über Triangulation berechnet werden. Mit einem derartigen Verfahren sind also auch Abstandsmessungen möglich. Systeme zur optischen Entfernungsmessung sind zwar sehr genau - die Genauigkeit nimmt aber mit dem Abstand zum jeweiligen Objekt ab. Als alleiniges Sensorsystem ist ein optisches Kamerasystem von den herrschenden Lichtverhältnissen abhängig. Bestimmte Lichtverhältnisse wie Gegenlicht, starke Sonneneinstrahlung, Dämmerung oder Dunkelheit können das Messergebnis stark negativ beeinflussen. Probleme können auch bei der Erfassung von Gegenständen auftreten, die keinen großen Kontrast oder Konturen zeigen. Hierbei kann es zu fehlerhaften Interpretationen des Umfelds kommen.

Aus diesen Gründen werden mehrere Sensorsysteme eingesetzt. So können digitale Kamerabilder mit den Informationen anderer Sensorsysteme wie Radar und vor allem LiDAR-Sensoren abgeglichen werden. Über die Zusammenfassung der Informationen kann die Software ein möglichst fehlerfreies Abbild der Umgebung erzeugen und mögliche Falscherkennungen einzelner Sensorsysteme korrigieren. Ein derart genaues Abbild der Umgebung zu erzeugen ist für autonome Fahrsysteme unabdingbar. Deshalb muss eine Abdeckung aus einem thermoplastischen Material gleichzeitig für mehrere Sensortypen geeignet sein; insbesondere ist es aus Designgründen wünschenswert, nicht mehrere Materialien einsetzen zu müssen, sondern die jeweilige Abdeckung aus einem Material realisieren zu können.

LiDAR (Abkürzung für engl. Light detection and ranging) oder auch LaDAR (Laser detection and ranging) ist eine dem Radar verwandte Methode zur optischen Abstands- und Geschwindigkeitsmessung. Statt der Radio- bzw. Mikrowellen beim Radar werden infrarote Laserstrahlen verwendet. Es gibt sehr unterschiedliche Typen von LiDAR-Systemen, die sich u.a. durch den horizontalen Erfassungsbereich (z.B. 70° bis zu 360°), den Lasertyp (z.B. scannender Dauerstrichlaser oder statischer Pulslaser) und die Sensortechnologie (z.B. mechanisch rotierender Spiegel oder Halbleiterelektronik) unterscheiden. Durch die vorliegende Erfindung werden auch dem LiDAR technisch verwandte Infrarotkameras abgedeckt, welche eine eigene Infrarotlichtquelle verwenden.

Auf thermoplastischem Material basierende Bauteile bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Da thermoplastische Materialien i.d.R. durchlässig für Infrarot(IR)-Strahlung sind, sollten diese prinzipiell für derartige Sensorsysteme geeignet sein. Überraschenderweise, wie im Rahmen der Erfindung erkannt wurde, eignen sich jedoch die meisten herkömmlichen Thermoplasten, welche im Automobilaußenbereich eingesetzt werden, nicht für derartige Sensoren. So ließ sich zeigen, dass schon geringe Wandstärken von weniger als 1 mm bei vielen Thermoplasten genügen, die Signalstärke eines LiDAR-Sensors derart deutlich herabzusetzen, dass sie für solche Systeme ungeeignet sind. Hierzu zählen z.B. Polyolefine, Polyamide, ABS, PC/ABS-Blends und weitere im Automobilaußenbereich gängig eingesetzte thermoplastische Materialien.

Neben dem Substratmaterial selbst können auch weitere Faktoren zur Dämpfung des LiDAR-Sensor-Signals beitragen. Hierzu zählen z.B. weitere Bauteile aus anderen Materialien sowie Schutz- bzw. Lackschichten.

Eine Abdeckung aus einem thermoplastischen Material soll dazu dienen, den LiDAR-Sensor und das optische Kamerasystem zu verbergen und auch einen Schutz für die empfindliche Sensorelektronik darstellen.

Ferner muss sichergestellt sein, dass das Substratmaterial eine ausreichende Transmission im sichtbaren Spektralbereich von 380 bis 780 nm aufweist, da sonst insbesondere bei bestimmten Lichtverhältnissen - beispielsweise in der Dämmerung - das optische Kamerasystem nicht mehr zuverlässig arbeitet und auch die Gesamtlichtausbeute bei CCD-Kameras stark reduziert wird. Erschwerend kommt hinzu, dass die Sensorabdeckung das Sensorsystem nicht nur vor Schmutz und Witterungseinflüssen schützen soll, sondern aus Designgründen auch visuell verbergen soll. D.h. das technische Sensorsystem soll durch die Abdeckung nicht oder nur schemenhaft erkennbar sein. Dies bedeutet, dass die Transmission des Materials derart gewählt werden muss, dass auf der einen Seite eine Durchsicht nicht oder nur sehr beschränkt möglich ist, es auf der anderen Seite aber möglich ist, dass das optische und IR-gestützte Sensorsystem fehlerfrei arbeitet.

Im Stand der Technik sind verschiedene thermoplastische Systeme beschrieben, die prinzipiell eine Durchlässigkeit für elektromagnetische Wellen aufweisen. Ferner sind thermoplastische Zusammensetzungen beschrieben, die eine hohe Farb- bzw. Witterungsstabilität aufweisen.

Die EP 2652030 beschreibt witterungsstabile Zusammensetzungen, die nur eine geringe Farbabweichung nach Bewitterung zeigen. Derartige Zusammensetzungen sind aber nicht in Kombination mit den genannten Sensorsystemen in geeigneter Weise einsetzbar.

Stereo-Kamera basierte Fußgängererkennungssysteme sind z.B. von Bergasa et al., Sensors (Basel, Switzerland) (2010), 10(4), 3741-58 beschrieben.

In CN 105400189 A wird ein Laserstrahlen-durchlässiges opakes Substratmaterial auf Basis eines Polyurethan-Polyester-Systems beschrieben. Es werden spezielle Farbmittelkombinationen aufgeführt, die für diese Polyurethan-Polyester-basierten Systeme geeignet sind und für Laserstrahlen prinzipiell durchlässig sind. Derartige Zusammensetzungen sind insbesondere für das Laserschweißen geeignet. Substratmaterialien auf Basis von Polycarbonat sind nicht beschrieben. Sensor-geeignete Substratmaterialien sind ebenfalls nicht beschrieben.

In der US2012287417 wird ein optischer Entfernungsmesser mit einer Abdeckung aus dunklem Polycarbonat, die für Licht mit einer Wellenlänge kleiner als 700nm undurchlässig ist, beschrieben. In der US2012081544 wird ein mit einer Kamera kombinierter LiDAR-Sensor für Automobile beschrieben.

In der WO 2016/037865 A1 sind Automobilaußenteile in glasartiger Optik beschrieben. Substratmaterialien, die für LiDAR-Systeme geeignet sind, werden hier nicht beschrieben. In der WO 2008/12775 A1 werden Radarsensoren für Automobilanwendungen beschrieben. Diese Sensoren arbeiten jedoch im Bereich von 20 - 25 GHz und lassen keinen Rückschluss auf geeignete Substratmaterialien für Laser-gestützte Systeme im IR-Bereich zu.

In der WO 2008/149093 A1 werden laminierte und pigmentierte Glassysteme beschrieben, die unter anderem für LiDAR-Sensoren geeignet sind. Aus diesem Dokument ist keine Lösung für Polycarbonat-basierte Substratmaterialien abzuleiten.

In der US 2009/284603 A1 werden thermoplastische Substrate, welche Farbmittel enthalten, beschrieben. Diese Substratmaterialien sollen eine gute Durchlässigkeit für IR-Strahlung aufweisen. Es werden bestimmte Farbmittelmischungen beschrieben. Ob diese Mischungen für Laser-gestützte Detektoren geeignet sind, wird nicht beschrieben. Es werden keine speziellen Farbmittelzusammensetzungen für Polycarbonat beschrieben.

Die EP 1772667 A2 beschreibt Kunststoffbauteile mit verdeckt angeordneten Lichtelementen. Das Kunststoffbauteil verdeckt dabei das Lichtelement, ist aber für die entsprechende Strahlung transparent oder semitransparent. Um dies zu erreichen, enthält das Substrat Effektpigmente. Derartige Pigmente sind für Laser-gestützte Systeme ungeeignet, da sie zu Streuung führen.

In der JP 2003-004942 A werden Mehrschichtkörper beschrieben, welche aus verschiedenen Lagen von Materialien bestehen, die einen unterschiedlichen Brechungsindex aufweisen. Diese Systeme sind für IR-Strahlung durchlässig. Allerdings werden an Materialien für Abdeckungen für Laser-gestützte IR-Sensoren deutlich höhere Anforderungen gestellt. Es werden keine Laser-gestützten Sensoren beschrieben.

Die US 2016/0291134 A1 berichtet über den Einsatz von LiDAR-Sensoren im Automobilbereich zum autonomen bzw. teilautonomen Fahren. Auf geeignete Substratmaterialien zur Abdeckung oder Einhausung von LiDAR-Sensoren wird nicht eingegangen.

Im Stand der Technik sind für IR-Strahlung durchlässige Systeme, die auf thermoplastischen Substraten basieren, beschrieben. Derartige Substrate sind z.B. für Infrarotkameras oder zum Laserschweißen geeignet. Allerdings ergibt sich daraus keine Lehre zum Handeln, da Laser-gestützte Sensor-Systeme, die im IR-Bereich arbeiten, eine deutlich erhöhte Empfindlichkeit aufweisen. So führen geringste Streuungen zu Fehlern in der Sensorik und machen damit entsprechende Substratmaterialien unbrauchbar.

Transparente Abdeckungen aus thermoplastischem Material für optische Kamerasysteme sind z.B. in US 2016187764 und CN 103665410 beschrieben. Eine Lehre zum Handeln bezogen auf die Aufgabenstellung ergibt sich hieraus nicht.

Die vorliegende Erfindung hat sich die Aufgabe gestellt, ein Sensor-System mit einer LiDAR-Einheit und einer optischen Kamera bereitzustellen, welches beim Betrachter einen ästhetisch angenehmen Eindruck erweckt. Insbesondere hat sie sich die Aufgabe gestellt, ein solches Sensor-System bereitzustellen, bei dem das Innere für einen Betrachter kaum oder gar nicht sichtbar ist und welches trotzdem einsatzfähig ist.

Erfindungsgemäß gelöst wird die Aufgabe durch ein Sensor-System gemäß Anspruch 1 und ein Fahrzeug gemäß Anspruch 15. Vorteilhafte Weiterbildungen sind in den Unteransprüchen angegeben. Sie können beliebig kombiniert werden, sofern sich aus dem Kontext nicht eindeutig das Gegenteil ergibt.

Das Sensor-System umfasst:
- eine LiDAR-Einheit mit einem Sender für Laserlicht mit einer Wellenlänge von 800 nm bis 1600 nm und einem Empfänger für Licht mit einer Wellenlänge von 800 nm bis 1600 nm;
- eine Kamera für sichtbares Licht mit einer Wellenlänge von 380 nm bis 780 nm und
- eine Abdeckung, welche so angeordnet ist, dass von der LiDAR-Einheit ausgesandtes und von ihr empfangenes IR-Licht und von der Kamera empfangenes sichtbares Licht durch die Abdeckung hindurch tritt, wobei die Abdeckung eine Farbstoffe enthaltende Schicht umfasst.

Die Abdeckung weist eine Lichttransmission Ty im Bereich von 380 bis 780 nm von ≥ 3% bis ≤ 25%, bestimmt nach DIN ISO 13468-2:2006 (D65, 10°), sowie eine Transmission für Licht im Bereich von 380 nm bis 1100 nm von ≥ 40%, bestimmt nach DIN ISO 13468-2:2006 (in Anlehnung an diese Norm, Wellenlängenbereich wurde wie genannt verwendet), auf.

Ferner dämpft die Abdeckung das LiDAR-Signal nur insoweit, als dass die Signalintensität von der LiDAR-Einheit ausgesandtem und von ihr wieder empfangenem IR-Licht (bestimmt durch Reflexion an einer glatten, mit TiO₂-haltiger weißer Farbe bestrichenen Fläche im Abstand von 3.2 m) ≥ 65% einer Referenz-Intensität, welche ohne die Abdeckung bestimmt wird, beträgt.

Die Farbstoffe enthaltende Schicht umfasst eine thermoplastische Zusammensetzung mit den folgenden Komponenten:
i) mindestens 70 Gew.-%, bezogen auf das Gesamtgewicht der Zusammensetzung, eines transparenten thermoplastischen Polymers;
ii) mindestens ein grünes und/oder ein blaues Farbmittel;
iii) mindestens ein rotes und/oder violettes Farbmittel;
wobei das Produkt aus der Summe Gewichtsprozent-Anteile (bezogen auf das Gesamtgewicht der Zusammensetzung) der Farbmittel ii) und iii) und der Dicke der Farbstoffe enthaltenden Schicht ≥ 0,041 Gew.-% mm bis ≤ 0,12 Gew.-% mm beträgt und wobei die Zusammensetzung 0 bis ≤ 0,0005 Gewichts-%, bezogen auf das Gesamtgewicht der Zusammensetzung, an Infrarot-Absorbern enthält.

Durch die erfindungsgemäße Ausgestaltung der Farbstoffe enthaltenden Schicht erscheint die Abdeckung für den Betrachter dunkel bis schwarz und dahinterliegende elektronische Elemente wie Sensoren oder Kameras werden kaum oder gar nicht wahrgenommen. Dieses ist als "Black Panel"-Effekt bekannt und ermöglicht dem Automobildesigner größere Freiheiten beim Design von ästhetisch ansprechenden Automobil-Exterieurs.

Die Abdeckung ist bevorzugt ein Formteil, das im Front- oder Heckbereich eines Fahrzeugs eingesetzt wird, z.B. ein Stoßfänger, Kühlergrill, Frontpanel oder ein Heckpanel, insbesondere ein Frontpanel für ein Kfz-Fahrzeug, kann aber ebenso ein Fahrzeugseitenteil sein. Die Abdeckung kann aber auch ebenso ein Dach oder Dachmodul für ein Kfz-Fahrzeug sein.

Es ist genauso möglich, dass die Abdeckung ein Formteil ist, welches im Inneren eines Fahrzeugs eingesetzt wird. Dann kann das erfindungsgemäße System zur Erkennung von Steuerungsgesten durch Insassen eines Fahrzeugs eingesetzt werden.

Die Abdeckung kann im Spritzgussverfahren hergestellt werden. Darüber hinaus weist insbesondere Polycarbonat auch sehr gute Eigenschaften wie eine hohe Wärmeformbeständigkeit und hohe Steifigkeit auf.

Als "System" wird nicht nur im engen Sinne eines Paketes aus mechanisch verbundenen Einzelteilen, etwa wie eine Vorrichtung, verstanden, sondern auch breiter als bloße Kombination (lediglich) funktionell zu einer Einheit verbundener Einzelteile. Der LiDAR-Sensor und die Kamera können separat in das jeweilige Fahrzeug eingebracht werden und die Abdeckung für eine gewünschte Stelle im Fahrzeug, durch welche die Pulse des LiDAR-Sensors und das von der Kamera zu registrierende Licht gehen sollen, vorgesehen sein. Ebenso kann es sich aber um eine mechanisch verbundene Kombination handeln.

Die LiDAR-Einheit weist einen Sender für Laserlicht mit einer Wellenlänge von 800 nm bis 1600 nm auf. Entsprechend der Natur von Laserlicht ist hierbei nicht gemeint, dass der Sender Licht mit jeder Wellenlänge zwischen 800 nm und 1600 nm emittiert. Vielmehr genügt es, wenn Licht einer Wellenlänge, beispielsweise 905 nm, emittiert wird. Es ist auch möglich, dass eine Mehrzahl von Lasern mit unterschiedlichen Wellenlängen in dem genannten Bereich eingesetzt wird.

Der Empfänger ist üblicherweise schmalbandig auf das emittierte Laserlicht, beispielsweise 903 nm oder 905 nm, abgestimmt. Es ist auch möglich, dass der Empfänger auf ein breiteres Spektralfenster im Wellenlängenbereich von 800 nm bis 1600 oder schmalbandig auf eine Mehrzahl von Wellenlängen abgestimmt ist.

Die Kamera ist eine Kamera für sichtbares Licht und nimmt Licht im Wellenlängenbereich von 380 nm bis 780 nm auf, wobei dieser Wellenlängenbereich nicht abschließend zu verstehen ist. Es ist möglich, dass dieser Wellenlängenbereich breiter ist, beispielsweise bis 800 nm, 900 nm, 1000 nm oder 1100 nm. Häufig haben Kameras für sichtbares Licht einen vorgeschalteten IR-Filter. Wird dieser entfernt, können bei einigen Modellen Bilder im Wellenlängenbereich bis 1100 nm aufgenommen werden.

Die Kamera ist vorzugsweise eine Videokamera, um möglichst in Echtzeit dem Fahrassistenzsystem oder autonomen Fahrsystem des Fahrzeugs Informationen liefern zu können. Weiter bevorzugt ist die Kamera eine Stereo-Kamera.

Die Abdeckung ist so angeordnet, dass Infrarotlicht von und zu der LiDAR-Einheit und sichtbares Licht zu der Kamera durch sie hindurchtritt. Sie stellt mit ihrer Farbstoffe enthaltenden Schicht einen partiellen Filter für sichtbares Licht dar und ist möglichst transparent für IR-Licht. Weiterhin schützt sie die LiDAR-Einheit und die Kamera vor Stoß, Verschmutzung, etc. Der Abstand zwischen Abdeckung und LiDAR-Einheit und/oder Kamera kann zum Beispiel im Bereich von 1 cm bis 20 cm liegen.

Eine Abdeckung im erfindungsgemäßen Sinn kann dabei ein die LiDAR-Einheit und die optische Kamera vollständig oder annähernd vollständig - von Kabelführungen etc. abgesehen - umhüllendes Gehäuse sein. Eine solche Kombination aus Gehäuse und LiDAR-Einheit und optischer Kamera ist neben dem übergeordneten System des Fahrzeugs gleichfalls ein erfindungsgemäßer Gegenstand. Alle Ausführungsformen und als bevorzugt beschriebenen Gestaltungen gelten selbstverständlich auch für diese Kombination alleine.

Ebenso kann die Abdeckung aber auch nur ein Element sein, das dem LiDAR-Sensor bzw. dem optischen Kamerasystem zur Fahrzeugaußenhaut hin, bevorzugt als Fahrzeugaußenhaut, vorgesetzt ist. Eine solche Abdeckung ist beispielsweise ein Frontpanel oder ein Stoßfänger, bevorzugt ein Frontpanel. Unter einem Frontpanel wird erfindungsgemäß ein Fahrzeugkarosserieteil verstanden, welches als Teil der Außenhülle am Fahrzeug angebracht wird. Dabei kann es sich um einen formgebenden Bestandteil der Fahrzeugfront handeln oder um ein Designelement, welches an der Front des Fahrzeuges angebracht wird. Unter einem "Frontpanel" wird ferner z.B. ein Ersatzteil für einen Kühlergrill verstanden.

Durch neue Mobilitätsformen, wie z.B. die Elektromobilität, ist ein Kühlergrill, bestehend aus einer Vielzahl von Öffnungen, nicht mehr nötig. Deshalb ist ein Frontpanel bevorzugt eine in sich geschlossene Frontabdeckung oder ein Karosserieteil, welches ggf. nur vereinzelt Lüftungsschlitze aufweist oder eine Kühlergrilloptik nur noch aus Designgründen beinhaltet und verschiedene Funktionen in sich vereint. Ein derartiges Bauteil kann nahtlos integriert werden.

Erfindungsgemäße Abdeckungen sind auch Seitenpanels, z.B. Türelemente, oder Heckpanels, die eine Abdeckung von ggf. erforderlichen seitlichen Sensoren oder am Heck angebrachten Sensoren ermöglichen. Bei einem Frontpanel können dahinter auch weitere Funktionslemente wie Bildschirme, Monitore, Leuchten etc. angebracht bzw. integriert sein. Diese Funktionen können z.B. dazu beitragen, die Fußgängersicherheit zu erhöhen, indem bestimmte Gefahrensymbole auf der Fahrzeugfront projiziert bzw. abgebildet werden. Sollten derartige Funktionen integriert sein, ist es bevorzugt, dass das Frontpanel oder die jeweilige Abdeckung möglichst farbneutral den dahinterliegenden Monitor oder das Beleuchtungselement wiedergibt.

Um ein dreidimensionales Abbild der Umgebung zu erzeugen, müssen mehrere Bilder durch Stereo-Kameras oder LiDAR-Sensoren aufgenommen werden. Dabei müssen die Sensoren einen gewissen Abstand voneinander haben, um eine Berechnung des dreidimensionalen Abbildes durch LiDAR oder stereooptisches Kamerasystem zu ermöglichen. So können die Kameras und/oder LiDAR-Sensoren an den äußeren Kanten des Fahrzeugs, z.B. im Bereich der Scheinwerfer, angebracht werden. Dabei können sie auch in die Scheinwerfergruppe selbst integriert werden. Dabei kann die Scheinwerfergruppe die Scheinwerfer selbst sowie Blinker und Sensoren umfassen.

So kann die Lichtquelle mit transparenten Polycarbonat abgedeckt sein und das Sensorsystem und die Kamera durch die erfindungsgemäße Abdeckung, um das Sensorsystem und die Kamera zu verdecken. Die Herstellung derartiger Scheinwerferabdeckungen kann beispielsweise im 2K-Spritzguss erfolgen. Das Gleiche ist auch für Rückleuchten möglich. Auf ähnliche Art und Weise ist die Integration im Außenspiegel möglich. Weiterhin kann das Sensorsystem im Bereich der Windschutzscheibe oder der A-, B-, oder C-Säule möglich sein. Ferner ist es möglich, Folien, die LiDARtransparent bzw. Kamera-tauglich sind, d.h. aus der erfindungsgemäß beschriebenen Zusammensetzung bestehen oder von dieser ableitbar sind, für die Abdeckung des Sensorsystems einzusetzen. Derartige Folien können hinterspritzt werden, um eine entsprechende Formgebung zu erreichen. Dabei muss das Material, mit dem hinterspritzt wird, sensorfähig sein, d.h. es darf das Sensorsignal nicht oder nur geringfügig dämpfen

Es ist erfindungsgemäß vorgesehen, dass die Abdeckung eine Lichttransmission Ty im Bereich von 380 bis 780 nm von ≥ 3% bis ≤ 25%, bestimmt nach DIN ISO 13468-2:2006 (D65, 10°), aufweist. Bei höheren Transmissionen wurde gefunden, dass der gewünschte "Black Panel"-Effekt nicht mehr zufriedenstellend eintritt und bei niedrigeren Transmissionen gelangt zu wenig Licht an die Kamera für sichtbares Licht, um auswertbare Bildinformationen zu liefern.

Es ist weiterhin vorgesehen, dass die Abdeckung eine Transmission für Licht im Bereich von 380 nm bis 1100 nm von ≥ 40%, bestimmt nach DIN ISO 13468-2:2006 (in Anlehnung an diese Norm, Wellenlängenbereich wurde wie genannt verwendet) aufweist. Geringere Transmissionen begrenzen die Reichweite des LiDAR-Systems und der Kamera zu stark.

Die angegebenen Transmissionen verstehen sich als gemittelte Transmissionen (arithmetisches Mittel), gemittelt über alle Wellenlängen in dem betreffenden Bereich.

Die Abdeckung dämpft das LiDAR-Signal nur insoweit, als dass die Signalintensität von der LiDAR-Einheit ausgesandtem und von ihr wieder empfangenem IR-Licht (bestimmt durch Reflexion an einer glatten, mit TiO₂-haltiger weißer Farbe bestrichenen Fläche im Abstand von 3.2 m) ≥ 65% einer Referenz-Intensität, welche ohne die Abdeckung bestimmt wird, beträgt. Höhere Dämpfungen, entsprechend Signal-Intensitäten unterhalb von 65% der Referenz-Intensität, verringern ebenfalls die Reichweite des LiDAR-Systems.

Die Farbstoffe enthaltende Schicht enthält ein transparentes thermoplastisches Polymer. "Transparent" im Sinne der vorliegenden Erfindung bedeutet, dass der Kunststoff eine Lichttransmission (in Anlehnung an ASTM 1003 bzw. ISO 13468; angegeben in % und Lichtart D65/100) von mindestens 6 %, weiter bevorzugt von mindestens 12 %, und besonders bevorzugt von mindestens 23 % aufweist. Weiterhin ist die Trübung (ASTM D1003: 2013) vorzugsweise kleiner als 3 %, weiter bevorzugt kleiner als 2,5 %, und besonders bevorzugt kleiner als 2,0 %.

Beispiele für geeignete Thermoplasten sind Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), Polyamid, cyclisches Polyolefm, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS^{®}, ein Handelsprodukt der Firma Ticona).

Bevorzugt sind Polycarbonat, Copolycarbonat, Polyestercarbonat, aromatische Polyester oder Polymethylmethacrylat oder Mischungen der genannten Komponenten. Besonders bevorzugt sind Polycarbonat und Copolycarbonat. So kann das Polycarbonat ein aromatisches Polycarbonat mit einer Schmelzvolumenrate MVR von 8 bis 20 cm³/(10 min), bestimmt nach ISO 1133-1:2012-03 (300°C, 1,2 kg) sein.

Erfindungsgemäß besonders bevorzugte aromatische Polycarbonate als Komponente i) haben bevorzugt gewichtsmittlere Molekulargewichte Mw von 22000 bis 29000 g/mol, wobei aber grundsätzlich auch gewichtsmittlere Molekulargewichte Mw von 10000 bis 50000 g/mol, weiter bevorzugt von 14000 bis 40000 g/mol, besonders bevorzugt von 16000 bis 32000 g/mol geeignet wären. Hierbei werden die Werte Mw durch Gelpermeationschromotographie ermittelt, kalibriert gegen Bisphenol A-Polycarbonat Standards unter Verwendung von Dichlormethan als Elutionsmittel. Die Polycarbonate werden bevorzugt durch Reaktionen von Bisphenolverbindungen mit Kohlensäureverbindungen, insbesondere Phosgen, oder beim Schmelzeumesterungsprozess mit Diphenylcarbonat bzw. Dimethylcarbonat dargestellt.

Hierbei sind Homopolycarbonate auf Basis von Bisphenol-A und Copolycarbonate auf der Basis der Monomere Bisphenol-A und 1,1-Bis-(4-hydroxyphenyl)-3,3,5-trimethylcyclohexan, z.B. Apec^{®} der Covestro Deutschland AG, besonders bevorzugt.

Die Zusammensetzung der Farbstoffe enthaltenden Schicht kann ferner übliche Additive wie Flammschutzmittel, Antistatika, UV-Absorber, Stabilisatoren, Antioxidantien und Entformungsmittel enthalten. Geeignete Ultraviolett-Absorber sind Benzotriazole, Triazine, Benzophenone und/oder arylierte Cyanoacrylate. Als Stabilisatoren bevorzugt sind Phosphite und Phosphonite sowie Phosphine. Ferner können Alkylphosphate z. B. Mono-, Di- und Trihexylphosphat, Triisoctylphosphat und Trinonylphosphat eingesetzt werden. Als Antioxidantien können phenolische Antioxidantien wie alkylierte Monophenole, alkylierte Thioalkylphenole, Hydrochinone und alkylierte Hydrochinone eingesetzt werden. Geeignete Entformungsmittel sind zum Beispiel solche auf Basis eines Fettsäureesters, bevorzugt eines Stearinsäureesters, insbesondere bevorzugt auf Pentaerythritbasis. Bevorzugt werden Pentaerythrittetrastearat (PETS) und/oder Glycerinmonostearat (GMS) eingesetzt.

Besonders bevorzugt enthält die Zusammensetzung weniger als 0,1 Gew.-%, ganz besonders bevorzugt sind die Zusammensetzungen der Substratschicht frei von Streuadditiven, z.B. solchen auf Basis von Acrylat, Polyethylen, Polypropylen, Polystyrol, Glas, Aluminiumoxid und/oder Siliciumdioxid. Ferner enthält die Zusammensetzung besonders bevorzugt weniger als 0,1 Gew.-%, ganz besonders bevorzugt ist sie frei von Weißpigmenten o.ä. Pigmenten wie z.B. Titandioxid, Kaolin, Bariumsulfat, Zinksulfid, Aluminiumoxid, Aluminiumhydroxid, Quarzmehl, von Interferenzpigmenten und/oder Perlglanzpigmenten, d.h. plättchenförmigen Partikeln wie Glimmer, Graphit, Talk, SiO2, Kreide und/oder Titandioxid, beschichtet und/oder unbeschichtet.

Ferner enthält die Zusammensetzung besonders bevorzugt weniger als 0,1 Gew.-%, ganz besonders bevorzugt ist die Zusammensetzung frei von nanopartikulären Systemen wie Metallpartikeln, Metalloxidpartikeln. Bevorzugt enthält die Zusammensetzung auch weniger als 0,1 Gew.-%, besonders bevorzugt ist sie frei von Pigmenten auf Basis von unlöslichen Pigmenten, wie sie z.B. in DE 10057165 A1 und in WO2007/135032 A2 beschrieben sind.

Es ist weiterhin vorgesehen, dass die Zusammensetzung 0 bis ≤ 0,0005 Gewichts-%, bezogen auf das Gesamtgewicht der Zusammensetzung, an Infrarot-Absorbern enthält. Vorzugsweise ist die Zusammensetzung frei von Infrarot-Absorbern. Dieses steht im Zusammenhang mit der Dämpfung des LiDAR-Signals durch Infrarot-Absorber im Polymer. Infrarot-Absorber sind insbesondere Ruß, LaB₆ und Moleküle mit Quaterylen-Struktur.

Die Abdeckung umfasst eine Farbstoffe enthaltende Schicht, wobei die Farbstoffe mindestens ein grünes und/oder ein blaues Farbmittel ii) sowie mindestens ein rotes und/oder violettes Farbmittel iii) sind. Erfindungsgemäß mit eingeschlossen ist der Fall, dass eine Schicht das Polycarbonat i) und das Farbmittel ii) enthält, aber nicht das Farbmittel iii) und eine weitere Schicht das Polycarbonat i) und das Farbmittel iii) enthält, nicht aber das Farbmittel ii). Diese beiden Schichten werden zusammen als die Farbstoffe enthaltende Schicht betrachtet. Bevorzugt ist jedoch der Fall, dass ii) und iii) in einer gemeinsamen Polymermatrix i) vorliegen.

Die Farbstoffe ii) und iii) sind vorzugsweise Farbstoffe, die im Infrarot-Bereich und insbesondere im Wellenlängenbereich des oder der LiDAR-Laser eine geringe oder keine Absorption zeigen.

Damit die erfindungsgemäß vorgegebenen Lichttransmissionen im Bereich des sichtbaren Lichts (380 nm bis 780 nm) für die Abdeckung erreicht werden, gilt für die Farbmittel ii) und iii) der Farbstoffe enthaltenden Schicht, dass das Produkt aus der Summe der Gew.-%-Anteile von ii) und iii) und der Dicke der Farbstoffe enthaltenden Schicht ≥ 0,041 Gew.-% mm bis ≤ 0,12 Gew.-% mm (vorzugsweise ≤ 0,11 Gew.-% mm, mehr bevorzugt ≤ 0,10 Gew.-% mm) beträgt. Somit kann in einer dünneren Schicht ein höherer Farbstoffgehalt und in einer dickeren Schicht ein niedrigerer Farbstoffgehalt eingestellt werden.

Das System kann nicht nur an Kraftfahrzeugen, sondern ebenso an anderen Transport- und Fortbewegungsmitteln, wie Drohnen, Flugzeugen, Helikoptern oder Schienenfahrzeugen, angebracht sein, die erfindungsgemäß alle unter dem Begriff "Fahrzeuge" subsumiert werden. Mit eingeschlossen sind auch (teil)autonome Maschinen, die nicht unbedingt der Fortbewegung dienen, wie Roboter, Erntemaschinen und dergleichen.

In einer Ausführungsform ist die Komponente ii) ausgewählt aus den Formeln (1), (2a-c), (3), (4a), (4b), (5), (6), (7) und/oder (8) und die Komponente iii) ist ausgewählt aus den Formeln (9), (10), (11), (12), (13), (14a), (14b) und/oder (15):

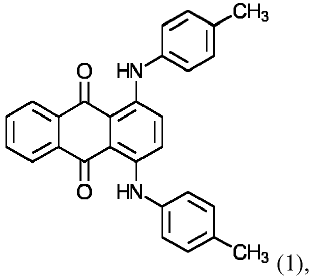

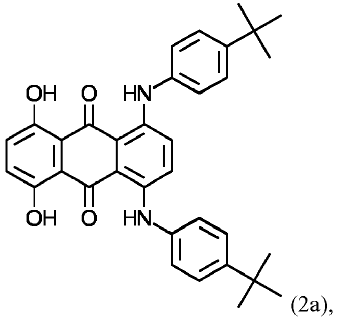

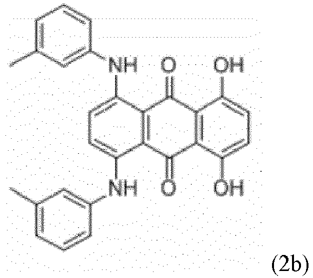

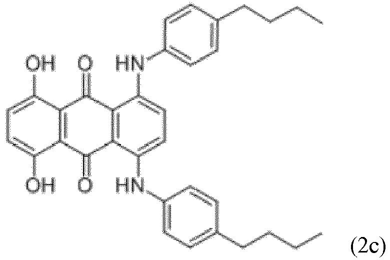

Das Farbmittel der Formel (1) ist unter dem Namen Macrolex Grün 5B der Firma Lanxess Deutschland GmbH bekannt, Color Index-Nummer 61565, CAS-Nummer: 128-90-3, und ist ein Anthrachinonfarbstoff.

Farbmittel der Formeln (2a), (2b) und (2c) sind unter anderem unter dem Namen Macrolex Grün G (Solvent Green 28) bekannt.

Blaue Farbmittel, die gemäß dieser Ausführungsform eingesetzt werden, sind Farbmittel der Formeln (3) und/oder (4a/4b) und/oder (5a/5b): 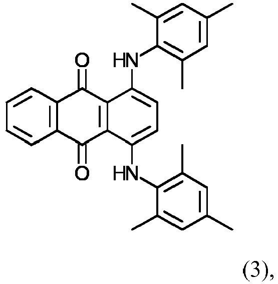 erhältlich unter dem Namen "Keyplast Blue KR", CAS-Nummer 116-75-6, 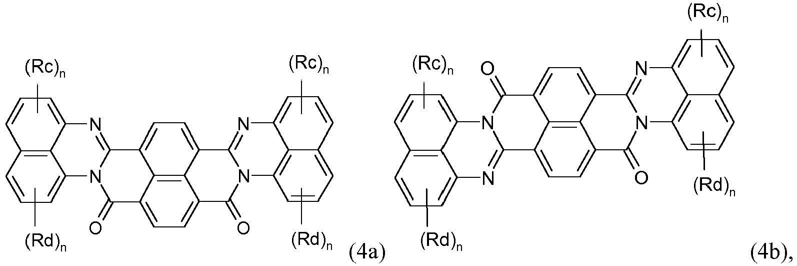 wobei
- Rc und Rd unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n unabhängig vom jeweiligen R für eine natürliche Zahl zwischen 0 und 3 steht, wobei der Rest für n=0 Wasserstoff ist.

In einer bevorzugten Ausführungsform sind Rc und/oder Rd Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-orthonaphthalino. Ferner stellen in einer bevorzugten Ausführungsform Rc und Rd jeweils einen tert-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n=0, so dass alle Rc und Rd = H sind.

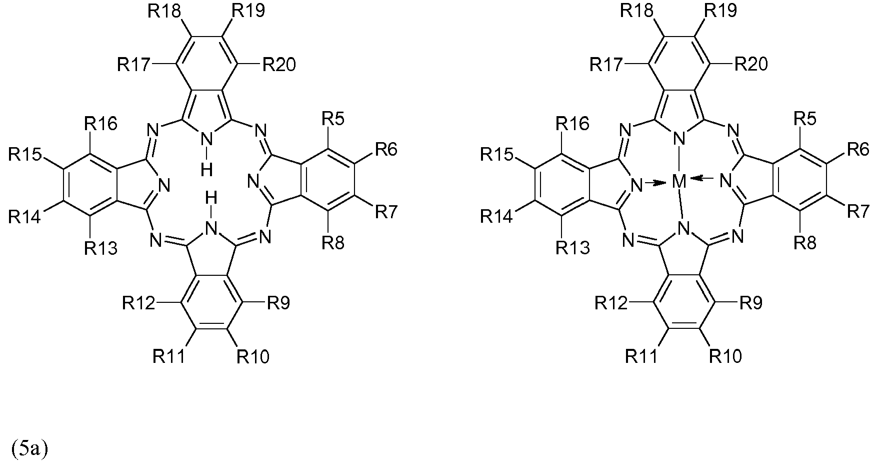

Die Reste R(5-20) sind jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6; mit R=Cl: Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7).

Insbesondere bevorzugt ist die Kombination von M = Cu und R = H für alle Positionen. So ist eine Verbindung der Struktur (5b) mit M=Cu und R(5-20)=H als Heliogen^{®} Blau K 6911D oder Heliogen^{®} Blau K 7104 LW von der BASF AG, Ludwigshafen erhältlich.

Verbindungen der Struktur (5a) sind z.B. als Heliogen^{®} Blau L 7460 von der BASF AG, Ludwigshafen, erhältlich.

Ferner können als blaue Farbmittel eingesetzt werden:
Farbmittel der Formel (6), erhältlich unter dem Namen "Macrolex Blue 3R Gran" 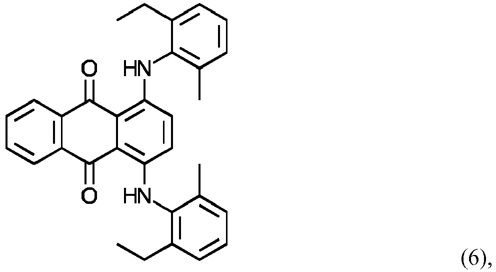 und/oder Farbmittel der Formel (7), erhältlich unter dem Namen "Macrolex Blue RR" (CAS 32724-62-2; Solvent Blue 97; C.I.615290),

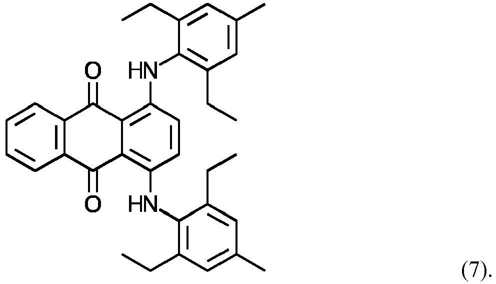

Ferner kann als blaues Farbmittel eingesetzt werden: 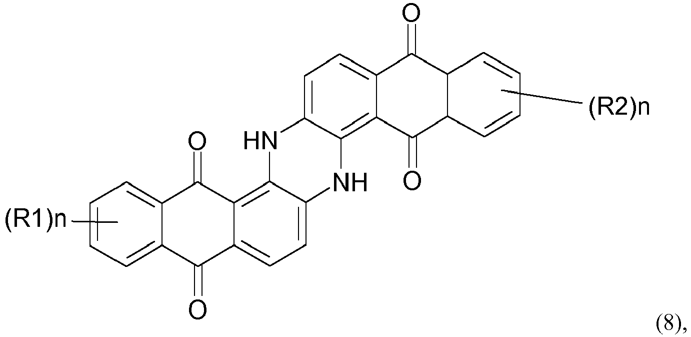 wobei
- R1 und R2 unabhängig voneinander für einen linearen oder verzweigten Alkylrest, oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n für eine natürliche Zahl zwischen 0 und 4 steht.

In einer besonders bevorzugten Ausführungsform ist in allen Ringen n=0, so dass alle R1 und R2 = H sind.

Farbmittel dieser Struktur (8) sind kommerziell erhältlich unter der Paliogen Blau Reihe der BASF AG.

Bei Verwendung von Farbmitteln der Struktur (8) sind insbesondere die Pigmente bevorzugt, die ein Schüttvolumen (bestimmt nach DIN ISO 787-11:1995-10) von 2 l/kg - 10 l/kg, bevorzugt 3 l/kg - 8 l/kg, eine spezifische Oberfläche (bestimmt nach DIN 66132:1975-07) von 5 m²/g - 60 m²/g, bevorzugt 10 m²/g - 55 m²/g, und einen pH-Wert (bestimmt nach DIN ISO 787-9) von 4 - 9 aufweisen.

Als rotes Farbmittel wird bevorzugt ein Farbmittel der Formel (9), erhältlich unter dem Namen "Macrolex Red 5B", mit der CAS-Nummer 81-39-0, eingesetzt:

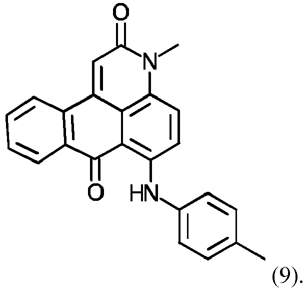

Weiterhin können Farbmittel der Formeln (10) mit der CAS-Nummer 20749-68-2 (auch: 71902-17-5) und (11) mit der CAS-Nummer 89106-94-5 eingesetzt werden:

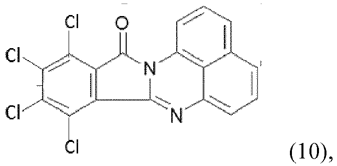

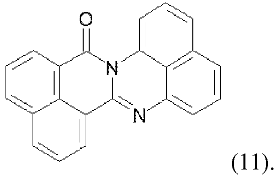

Als violette Farbmittel werden bevorzugt Farbmittel der Formeln (12) mit der CAS-Nummer 61951-89-1, (13), erhältlich unter dem Namen "Macrolex Violet B" von der Lanxess AG, mit der CAS-Nummer 81-48-1, oder (14a/14b) eingesetzt: 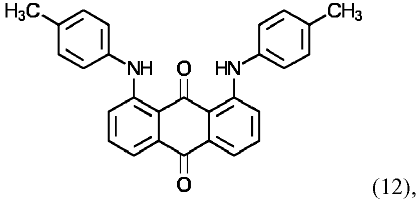 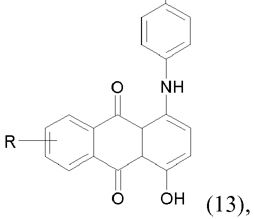 wobei R ausgewählt ist aus der Gruppe, die aus H und p-Methylphenylamin-Rest besteht; bevorzugt ist R = H; 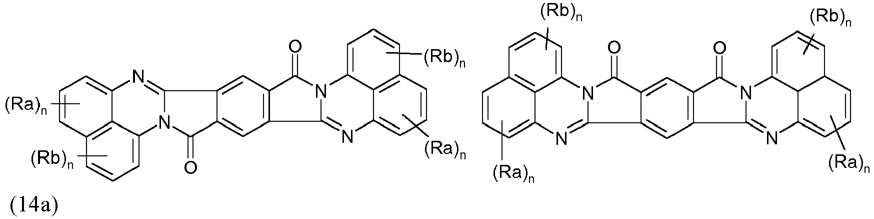 wobei
- Ra und Rb unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n unabhängig vom jeweiligen R für eine natürliche Zahl zwischen 0 und 3 steht, wobei der Rest für n=0 Wasserstoff ist.

In einer bevorzugten Ausführungsform sind Ra und/oder Rb Cl und stehen in o- und/oder p-Positionen zu den Kohlenstoffatomen, welche die Aminofunktionalitäten tragen, wie z.B. diorthochlornapthalino-, di-ortho, mono-para-chlornaphthalino, sowie mono-orthonaphthalino. Ferner stellen in einer bevorzugten Ausführungsform Ra und Rb jeweils einen tert.-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n=0, so dass alle Ra und Rb = H sind.

Ferner können Farbmittel eingesetzt werden, die der Formel (15), erhältlich unter dem Namen "Macrolex RedViolet R", CAS-Nummer 6408-72-6, entsprechen:

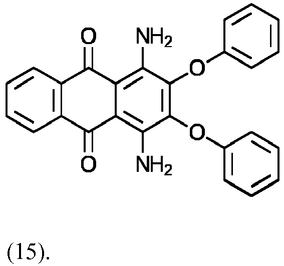

Gemäß einer weiteren Ausführungsform umfasst die thermoplastische Zusammensetzung der Farbstoffe enthaltende Schicht die folgenden Komponenten:
- mindestens 99 Gew.-%, bezogen auf das Gesamtgewicht der Zusammensetzung, aromatisches Polycarbonat mit einer Schmelzvolumenrate MVR von 15 bis 20 cm³/(10 min), bestimmt nach ISO 1133-1:2012-03 (300°C, 1,2kg);
- Farbmittel der Formel (2a), (2b) und/oder (2c);
- Farbmittel der Formel (5b) mit M = Cu und R(5-20) = H;
- Farbmittel der Formel (10);
wobei die Summe der insgesamt eingesetzten Farbmittel ≥ 0,017 Gew.-% bis ≤ 0,057 Gew.-%, bezogen auf das Gesamtgewicht der Zusammensetzung, beträgt.

Gemäß einer weiteren Ausführungsform umfasst die thermoplastische Zusammensetzung der Farbstoffen enthaltenden Schicht einen gelben und/oder orangefarbenen Farbstoff der Formeln (16), (17), (18), (19), (20) oder eine Mischung aus mindestens zwei hiervon:
Als gelbe Farbmittel werden Farbmittel der Formeln (16), erhältlich unter dem Namen "Macrolex Gelb 3G" mit der CAS-Nummer 4702-90-3, und/oder (17), erhältlich unter dem Namen "Macrolex Orange 3G" (CAS-Nummer 6925-69-5, C.I. 564100), eingesetzt:

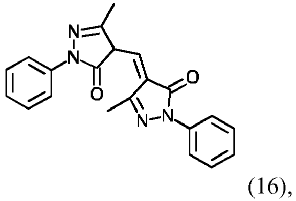

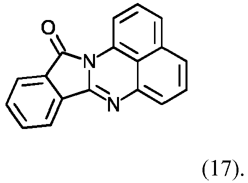

Ferner ist es möglich, Farbmittel der Formeln (18), erhältlich unter dem Namen "Oracet Yellow 180" mit der CAS-Nummer 13676-91-0, (19) mit der CAS-Nummer 30125-47-4 und/oder (20), erhältlich unter dem Namen "Oracet Orange 220; Solvent Orange 116" mit der CAS-Nummer 669005-94-1, einzusetzen.

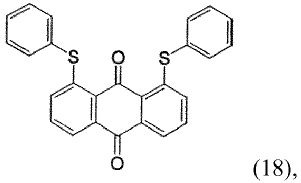

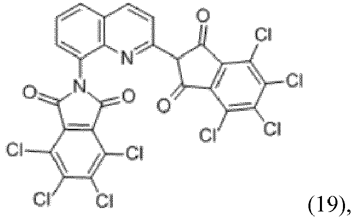

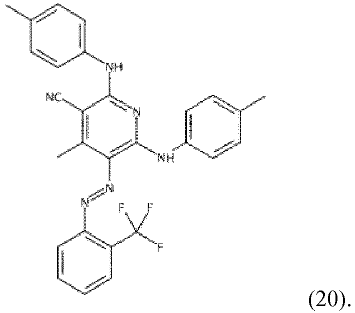

Grundsätzlich können aber neben den oben beschriebenen Farbmitteln ggf. zusätzlich weitere Farbmittel eingesetzt werden. Solche, die bevorzugt sind, sind Heliogen Grün Typen (wie z.B. Heliogen Grün K 8730; CAS 1328-53-6; Pigment Green 7; C.I.74260).

Insbesondere bevorzugt sind Grün G (2a, b, c), Heliogen Grün sowie Heliogen Blau (5a, 5b), Paliogen Blau (8) in der einen Gruppe sowie Macrolex Rot EG (10) und Amaplast Violet PK (14a, 14 b) und M. Violet B (13) in der anderen Gruppe in Kombination mit gelben Farbmitteln.

Exemplarische Farbmittelkombinationen sind nachfolgend aufgeführt, wobei die Gew.-%-Angaben auf das Gesamtgewicht der Farbstoffe enthaltenden Schicht bezogen sind und um ± 10% des angegebenen Wertes abweichen dürfen:
Macrolex Violett 3R (12) und Macrolex Grün 5B (1), jeweils 0,1 Gew.-% von beiden dieser Farbmittel;
Macrolex Red EG (10) 0,004 Gew.-%, Macrolex Violet 3R (12) 0,001 Gew.-% und Heliogen Blue K6911 [(5b) mit M=Cu und R(5-20)=H] 0,0024 Gew.-%;
Oracet Yellow 180 (18) 0,0004 Gew.-%, Macrolex Red EG (10) 0,0045 Gew.-% und Macrolex Green 5B (1) 0,0046 Gew.-%;
Macrolex Red EG (10) 0,0007 Gew.-%, Farbmittel der Struktur (14a) und/oder (14b) 0,0014 Gew.-% und Paliogen Blue L6385 (8) 0,0030 Gew.-%;
Farbmittel der Struktur (11) 0,0015 Gew.-% , Macrolex Violet B (13) 0,0012 Gew.-% und Heliogen Blue K6911 [(5b) mit M=Cu und R(5-20)=H] 0,0010 Gew.-% und
0,0018 Gew.-%, Macrolex Blue RR (7) 0,0032 Gew.-% und Macrolex Red EG (10) 0,0031 Gew.-%.

In einer weiteren Ausführungsform weist die Kamera keinen oder einen eingeschränkten Infrarot-Filter auf. Auf diese Weise lässt sich der Detektionsbereich der Kamera vom sichtbaren Licht in den IR-Bereich ausdehnen.

In einer weiteren Ausführungsform weist die Abdeckung weiterhin eine Decklackschicht auf. Dieses kann zur Verbesserung der Kratz- und Witterungsbeständigkeit dienen. Die hierfür besonders geeigneten Beschichtungsysteme, die beispielsweise für Polycarbonatplatten im Baubereich, für Scheinwerferabdeckscheiben aus Polycarbonat oder auch im Bereich der Polycarbonat-Automobilverscheibung verwendet werden, lassen sich grob in drei Kategorien einteilen:
(a) Thermisch härtende Beschichtungssysteme auf Basis eines Polysiloxanlackes, die sowohl einschichtig als auch mehrschichtig (mit einer lediglich haftvermittelnden Primerschicht zwischen Substrat und Polysiloxandecklack) sein können. Diese sind u. a. in US 4,278,804, US 4,373,061,US 4,410,594, US 5,041,313 und EP-A-1 087 001 beschrieben. Eine Variante ist die Verwendung des für den siloxanbasierten Decklack notwendigen Haftprimers als UV-Schutzprimer, indem dieser mit UV-Absorber versetzt und in einer höheren Schichtdicke appliziert wird.
(b) Thermisch härtende Mehrschichtsysteme mit einem UV-Schutzprimer und einem Decklack auf Basis eines Polysiloxanlackes. Geeignete Systeme sind bekannt z.B. aus US 5,391,795 und US 5,679,820.
(c) Ebenso können UV-härtende Beschichtungssysteme z.B. auf Acrylat-, Urethanacrylat oder Acrylsilanbasis, die gegebenenfalls Füllstoffe zur Verbesserung der Kratzfestigkeit beinhalten, aufgrund ihres größeren Applikationsschichtdickenfensters einen ausreichenden Witterungsschutz bilden. Solche Systeme sind bekannt und u.a. beschrieben in US 3,707,397 oder DE 69 71 7959, US 5,990,188, US 5,817,715, US 5,712,325 und WO 2014/100300.

In einer weiteren Ausführungsform enthält die Decklackschicht ein organo-modifiziertes Silan oder dessen Reaktionsprodukt. In einer weiteren Ausführungsform liegt zwischen der Decklackschicht und der Farbstoffe enthaltenden Schicht eine Haftvermittlerschicht (Primerschicht) vor. Bevorzugt ist eine Kombination eines haftvermittelnden UV-Schutzprimers auf der Basis von Polymethymethacrylat mit Dibenzoylresorcin als UV-Absorber und eines Polysiloxandecklacks mit silyliertem UV-Absorber. Beide Schichten, d.h. Primer und Decklack zusammen übernehmen hierbei die UV-Schutzausrüstung

In einer weiteren Ausführungsform ist der in der Decklackschicht verwendete Decklack ein mittels UV-Strahlung härtender Decklack, wie bereits zuvor unter Punkt c) beschrieben wurde.

Gemäß einer weiteren Ausführungsform liegt auf der der Decklackschicht gegenüberliegenden Seite der Farbstoffe enthaltenden Schicht eine weitere Schicht vor. Diese weitere Schicht ist dem LiDAR-System und der Kamera zugewandt und kann auch eine Decklackschicht sein. Vorzugsweise ist aber die weitere Schicht eine Antireflexschicht, eine Antibeschlagschicht, eine Antistaubschicht, eine die Medienbeständigkeit verbessernde Schicht, eine die Kratzfestigkeit verbessernde Schicht oder deren Kombination.

Beispielhaft für Antibeschlag- und Antidustbeschichtungen (Antistaubbeschichtungen) sind Schichten, die durch Flammsilikatisieren erhalten werden. Als Antireflexschichten gelten alle ein- oder mehrlagigen Schichtaufbauten, die als äußere Schicht eine niedrigbrechende Schicht aufweisen (nD <1,5). Auch die Verwendung des Außen verwendeten Lackes kann u.a. folgende Eigenschaften verbessern Medienbeständigkeit, Kratzfestigkeit, Verringerung der Reflexion (Antireflex) und leichte Antidust-Wirkung.

Gemäß einer weiteren Ausführungsform weist in der Abdeckung die Farbstoffe enthaltende Schicht eine Dicke von ≥ 0,15 mm bis ≤ 5 mm auf. Hierbei wird die größte Dicke der Schicht im Bereich des LiDAR-Laserdurchgangs betrachtet.

Gemäß einer weiteren Ausführungsform weist die Abdeckung eine Mehrzahl von Farbstoffe enthaltende Schichten auf, welche gleich oder verschieden sein können. In diesen Schichten können sowohl Farbmittel der Gruppen ii) und iii) als auch weitere Farbmittel enthalten sein.

Gemäß einer weiteren Ausführungsform weist die Abdeckung weiterhin eine Schicht eines aromatischen Polycarbonats auf, welches keine grüne, blaue, rote und/oder violette Farbmittel enthält. Vorzugsweise ist diese Schicht transparent. Sie kann so als Trägerschicht für eine eingefärbte Folie dienen. Solche Verbünde lassen sich durch Hinterspritzen der eingefärbten Folie erhalten.

Die Erfindung betrifft ebenfalls ein Fahrzeug, umfassend ein erfindungsgemäßes System.

### Beispiele

Die vorliegende Erfindung wird anhand der nachfolgenden Beispiele näher erläutert, ohne jedoch darauf beschränkt zu sein.

### Eingesetzte Materialien

**PC1:** Lineares Bisphenol-A-Polycarbonat mit Endgruppen basierend auf 4-Butylphenol mit einem MVR von 19 cm³/(10 min), gemessen bei 300 °C und 1,2 kg Belastung gemäß ISO 1033, enthaltend 0,40 Gew.-% Pentaerythrittetrastearat als Entformungsmittel.

**A:** Macrolex Grün G: Solvent Green 28; CAS-Nummer 4851-50-7 von der Firma Lanxess AG, Leverkusen. Entspricht Formeln (2a), (2b) oder (2c).

**B:** Heliogen Blau K7104: Pigment Blue 15:4; CAS-Nummer 147-14-8 der Firma BASF SE, Ludwigshafen. Entspricht Struktur (5b) mit M = Cu und R(5-20) = H.

**C:** Macrolex Gelb 3G: Solvent Yellow 93; CAS-Nummer 4702-90-3 von der Firma Lanxess AG, Leverkusen. Entspricht Struktur (16).

**D:** Macrolex Rot EG: Solvent Red 135; CAS-Nummer 20749-68-2 von der Firma Lanxess AG, Leverkusen. Entspricht Struktur (10).

**PC2:** Zusammensetzung, enthaltend 99,8 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol, und enthaltend 0,1 Gew.-% Macrolex Violet 3R (Entspricht Struktur (12)) und 0,1 Gew.-% Macrolex Grün 5B (Entspricht Struktur (1)).

**PC3:** Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol, und enthaltend UV-Absorber sowie Entformungsmittel; der Farbmittelgehalt betrug < 0,0002 Gew.-%.

**PC4:** Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol, und enthaltend UV-Absorber sowie Entformungsmittel; der Farbmittelgehalt betrug < 0,0002 Gew.-%.

**SHP 470 FT 2050 (Primer)/AS 4700 F (Decklack):** Silikonbasierte Kratzfestbeschichtung von der Firma Momentive Performance Materials, USA. Der Einsatz von Primer und Decklack erfolgte gemäß den Vorgaben des Herstellers. Wenn in den nachfolgenden Beispielen von der AS 4700 F-Beschichtung die Rede ist, wurde diese immer zusammen mit diesem Primer eingesetzt.

### Eingesetzter LiDAR-Sensor

Es wurde ein LiDAR-Sensor der Firma Velodyne, Ty Puck VLP 16 eingesetzt. Dieser arbeitet im Wellenlängenbereich von 895 bis 915 nm (Toleranzbereich). Die Nennwellenlänge, d.h. eigentliche Arbeitswellenlänge, der 16 Laser liegt bei 903 nm.

Die wesentlichen Eigenschaften dieses Sensors sind:
Erfassungswinkel vertikal -15° bis + 15° mit 2°-Abstand zwischen den Scanebenen und horizontal 360°. Die Software beinhaltet eine Multi-Beam-Funktion mit 16 Beams zur Minimierung von Schatteneffekten. Horizontale Auflösung des Lasersystems liegt bei 0,1° bis 0,4°, abhängig von der Rotationsgeschwindigkeit. Die Rotationsgeschwindigkeit der Vertikalerfassung ist einstellbar zwischen 5 bis 20 Hz. Bei einer Datenrate von 2Mbyte / sec werden 300 000 Punkte / Sekunde erfasst. Die erzielte Messgenauigkeit liegt dabei bei ca. +/- 3cm, dies entspricht 1 Sigma. Die erfassbare Messdistanz liegt zwischen 1 mm bis 100 Meter. Der Energiebedarf des Sensorsystems liegt bei 8 Watt elektrische Leistung, entsprechend 0,7A bei 12 Volt. Die Gesamtabmessungen des Sensors sind: Durchmesser 100 mm und Höhe 65 mm.

### Messverfahren

Zur Reduktion der Streulichtsignale wurde der Sensorkopf des LiDAR-Sensors auf der messwegabgewandten Seite abgeschirmt. Es wurden nur Laser 1, 3, 5, 7, 8, 10, 12, 14 verwendet. Außerdem wurde das Field-Of-View (FOV) des Sensors im Sensor-Interface auf 20° (350°-10°) begrenzt. Als Reflexionsfläche diente eine glatte, mit TiO₂-haltiger Farbe gestrichene weiße Fläche. Die Wand befand sich 3,2 m vom Lidarsensor entfernt.

Die Prüfmuster wurden mittels eines Probenhalters parallel zum LIDAR getestet, wobei die Proben-Rückseite ca.15 mm vor dem LiDAR-Sensor lag, so dass sowohl das Ausgangssignal als auch das zurückgeworfene Eingangssignal durch die Wanddicke der Prüfplatte dringen musste Die Auswertung wurde mit der Software "VeloView" vom Hersteller des LiDAR-Sensors Velodyne durchgeführt. Es wurde der Mittelwert der gemessenen Intensitäten einer Probe bestimmt. Dieser Proben-Mittelwert wurde durch den Mittelwert der Referenzmessung (Luft) geteilt, um so die relative Intensität zu bestimmen.

Die gemessenen Intensitäten des wieder aufgenommenen Lasersignals lagen zwischen 0% und 100%. Je geringer die Dämpfung (Abschwächung) des Signals ist, also umso höher die Intensität des gemessenen Signals ist, desto geeigneter wird die Abdeckung für LiDARgestützte Sensoranwendungen im Automobilbereich eingestuft. Die in den Beispielen gemessenen Intensitäten sind in der Spalte "LIDAR-Signal bez. auf Luftwert in %" dokumentiert.

Die Durchlässigkeit der jeweiligen Platte für IR-Strahlung im Bereich von 800 bis 1600 nm wurde bestimmt gemäß DIN ISO 13468-2:2006. Die Lichttransmission im VIS-Bereich des Spektrums (380 bis 780 nm, Transmissionsgrad Ty) wurde bestimmt nach DIN ISO 13468-2:2006 (D65, 10°, Die Transmissionsmessungen wurden an einem Lambda 950 Spektralphotometer der Firma Perkin Elmer mit Photometerkugel durchgeführt.

Zur Beurteilung eines "Black Panel-Effekts" wurde ein Kameraobjektiv auf einer Hebebühne in einem mit Samt abgedunkelten Kasten platziert. Die offene Seite des Kasten wurde mit Pappe zugeklebt. Anschließend wurde eine Öffnung in die Pappe geschnitten, so dass das Kameraobjektiv sichtbar war und vor der Öffnung die Formteile platziert werden konnte.

Hierbei wurde als Erfolgskriterium festgelegt, ob eine hinter dem Formteil befindliche Sensorapparatur bei Tageslicht zu erkennen ist. Einstellungen: Belichtung 1/10s, Blende F/4, ISO 400. Bei erfindungsgemäßen Formteilen ist dieses nicht oder nur schemenhaft der Fall. Die Ergebnisse sind in der Spalte "Black Panel" eingetragen. Die Abkürzungen sind ++ (gut), + (relativ gut), 0 (schemenhaft) und - (nicht erkennbar).

Zur Beurteilung der Funktionsfähigkeit einer Kamera für sichtbares Licht wurde eine Canon EOS 600D mit dem EFS 18-55mm Standard-Zoomobjektiv verwendet. Die Einstellungen für das Objektiv waren: Belichtung 1/25 s, Blende f 8,0 und ISO 400.

Die Messung wurde in einem Messraum bei einfallenden Sonnenlicht durchgeführt. Die Kamera und das Objekt befanden sich im Schatten, so dass nur diffuses Licht im Messbereich vorlag. Mit einem Pantec Digital Luxmeter LM-20 wurden ca. 2800 Lux vor dem Objekt, ca. 700 Lux vor der Linse gemessen. Hierbei wurde als Erfolgskriterium festgelegt, ob ein Testgegenstand mit der Kamera durch das Formteil hindurch noch gesehen werden konnte. Bei erfindungsgemäßen Formteilen ist dieses gut oder befriedigend der Fall. Die Ergebnisse sind in der Spalte "Dunkel/Dunkel" eingetragen. Die Abkürzungen sind ++ (gut), 0 (befriedigend) und - (nicht erkennbar).

Bei der Angabe der Dicken der untersuchten Formteile wurden etwaige Beschichtungen aufgrund ihrer geringen Dicke nicht berücksichtigt.

Die Rezepturen für die eingesetzten Formteile 1 bis 8 waren:

| | PC1 | A | B | C | D |
|---|---|---|---|---|---|
| | Gew.-% | Gew.-% | Gew.-% | Gew.-% | Gew.-% |
| Formteil 3 | 99,98427 | 0,0008 | 0,004 | 0,00063 | 0,0103 |
| Formteil 1 | 99,98164 | 0,00093 | 0,0047 | 0,00073 | 0,012 |
| Formteil 2 | 99,9762 | 0,0012 | 0,0061 | 0,0009 | 0,0156 |
| Formteil 4 | 99,97433 | 0,0013 | 0,0066 | 0,00097 | 0,0168 |
| Formteil 5 | 99,9721 | 0,0014 | 0,0072 | 0,001 | 0,0183 |
| Formteil 6 | 99,9643 | 0,0018 | 0,0092 | 0,0013 | 0,0234 |
| Formteil 7 | 99,958 | 0,0021 | 0,0108 | 0,0015 | 0,0276 |
| Formteil 8 | 99,9435 | 0,0028 | 0,0146 | 0,002 | 0,0371 |

| | Summe A+B+D | Summe A+B+D ^{∗} 2,3 mm | Summe A+B+D ^{∗} 2,5 mm |
|---|---|---|---|
| | Gew.-% | Gew.-% mm | Gew.-% mm |
| Formteil 3 | 0,0151 | 0,03473 | 0,036179 |
| Formteil 1 | 0,01763 | 0,040549 | 0,042228 |
| Formteil 2 | 0,0229 | 0,05267 | 0,05474 |
| Formteil 4 | 0,0247 | 0,05681 | 0,059041 |
| Formteil 5 | 0,0269 | 0,06187 | 0,06417 |
| Formteil 6 | 0,0344 | 0,07912 | 0,08211 |
| Formteil 7 | 0,0405 | 0,09315 | 0,0966 |
| Formteil 8 | 0,0545 | 0,12535 | 0,12995 |

Für das Material PC2 ergibt sich eine Summe an violetten und grünen Farbstoffen von 0,2 Gew.-%. Mit einer Schichtdicke von 0,1 mm erhält man rechnerisch 0,02 Gew.-% mm, mit einer Schichtdicke von 0,175 mm erhält man 0,035 Gew.-% mm und mit einer Schichtdicke von 0,5 mm erhält man 0,1 Gew.% mm.

In den Beispielen der Beispielgruppe 1 wurden einzelne unbeschichtete ("1K") und mit AS 4700 F beschichtete ("1K-B"), eingefärbte Polycarbonat-Formteile untersucht. Die Bezeichnungen "Komponente zur LIDAR-Seite" und "Komponente zur Straße" kennzeichnen die Orientierung der untersuchten Formteile, das heißt ob sie dem LIDAR-Sensor zugewandt sind oder der Außenseite, welche im Verwendungsfall des Systems in einem Fahrzeug zur Straße hin zeigen würde. Die Beispiele der Beispielgruppe 1 betreffen einkomponentige Aufbauten, in denen keine weiteren Formkörper vorliegen. Daher wird in der Spalte "Komponente zur Straße" nichts aufgeführt.

Bei den Beispielen Nr. 1 bis 8 wurden aufgrund von Lichtstreuungen auf den Oberflächen der Probenplatten niedrigere LIDAR-Signale als erwartet beobachtet, so dass keine sinnvollen Aussagen gemacht werden konnten. Daher sind hier keine Messwerte sind in der Spalte "LIDAR-Signal bez. auf Luftwert in %" aufgeführt.

In den Beispielen der Beispielgruppe 2 wurde ein zweikomponentiger Aufbau für die Abdeckung untersucht. Zur LiDAR-Seite hin waren jeweils die eingefärbten Formkörper gerichtet. In Beispielen Nr. 19 bis 23 waren die Formkörper auf ihrer nach Außen, im Einsatzfall in einem Kraftfahrzeug zur Straße hin, gerichteten Seite mit einer 3,2 mm-Schicht des transparenten Polycarbonats PC3 abgedeckt. In Beispielen Nr. 24 bis 26 wurden zwei gleiche Formteile miteinander verbunden, wobei sowohl die zur Straße gerichtete Seite als auch die dem LiDAR-Sensor bzw. der Kamera zugewandten Seite des Bauteils mit der Kratzfestbeschichtung AS 4700 F versehen waren. Beispiele Nr. 27 bis 31 sind eine Kombination aus gefärbtem Formteil, transparenter 2,3 mm-AG PC3-Schicht und einer Kratzfestbeschichtung mit AS 4700 F sowohl auf der zur Straße gerichteten Seite als auch der dem LiDAR-Sensor bzw. der Kamera zugewandten Seite des Bauteils.

Die Beispiele der Beispielgruppe 3 betreffen Kombinationen aus der eingefärbten Folie PC2 mit den angegebenen Foliendicken und einer 3,2 mm dicken transparenten PC4-Folie, Die je einmal ohne Beschichtung und mit der Kratzfestbeschichtung AS 4700 F sowohl auf der zur "Straße" gerichteten Seite als auch der dem LiDAR-Sensor bzw. der Kamera zugewandten Seite des Bauteils.

Weitere Experimente wurden mit IR-Absorberhaltigen, eingefärbten Polycarbonaten durchgeführt. Diese sind in der Beispielgruppe 4 zusammengefasst. Die Dämpfung des LiDAR-Lasers war zu stark, weswegen diese Polycarbonate nicht für die erfindungsgemäßen Zwecke geeignet waren. Die verwendeten Polycarbonatrezepturen sind im Anschluss an die Tabelle für die Beispielgruppe 4 aufgeführt.

"Beidseitig" bedeutet in den nachfolgenden Tabellen, dass sowohl die Seite, die nach Außen gerichtet ist, als auch die dem LiDAR-zugewandte Seite beschichtet ist.

### Beispielgruppe 1 (^{∗}: Vergleichsbeispiel):

| **Nr.** | A**ufbau** | **Komponente zur LIDAR-Seite** | **Komponente Zur Straße** | **Beschichtung** | **Dicke mm** | **Black Panel** | **Dunkel/ Dunkel** | **#Ty[%] (D65 10°)** | **T 400 bis 900** | **T 400 bis 1000** | **T 400 bis 1100** | **LIDAR-Signal bez. auf Luftwert in %** |
|---|---|---|---|---|---|---|---|---|---|---|---|---|
| 1^{∗} | 1K | Formteil 3 | keine | keine | 2,5 | + | ++ | 29 | 48 | 55 | 60 | - |
| 2 | 1K | Formteil 1 | keine | keine | 2,5 | 0 | ++ | 24 | 46 | 53 | 58 | - |
| 3 | 1K | Formteil 2 | keine | keine | 2,5 | 0 | ++ | 17 | 41 | 49 | 55 | - |
| 4 | 1K | Formteil 4 | keine | keine | 2,5 | 0 | ++ | 15 | 40 | 48 | 54 | - |
| 5 | 1K | Formteil 5 | keine | keine | 2,5 | - | 0 | 13 | 39 | 47 | 53 | - |
| 6 | 1K | Formteil 6 | keine | keine | 2,5 | - | 0 | 7 | 35 | 44 | 51 | - |
| 7 | 1K | Formteil 7 | keine | keine | 2,5 | - | 0 | 5 | 33 | 43 | 49 | - |
| 8^{∗} | 1K | Formteil 8 | keine | keine | 2,5 | - | - | 2 | 30 | 40 | 47 | - |
| | | | | | | | | | | | | |
| 9^{∗} | 1K | Formteil 1 | keine | keine | 2,3 | ++ | ++ | 25 | 46 | 53 | 58 | 74 |
| 10 | 1K | Formteil 2 | keine | keine | 2,3 | 0 | ++ | 20 | 42 | 50 | 56 | 70 |
| 11 | 1K | Formteil 4 | keine | keine | 2,3 | 0 | ++ | 20 | 42 | 50 | 56 | 71 |
| 12 | 1K | Formteil 7 | keine | keine | 2,3 | - | 0 | 7 | 33 | 42 | 49 | 70 |
| 13^{∗} | 1K | Formteil 8 | keine | keine | 2,3 | - | - | 2 | 28 | 38 | 45 | 67 |
| | | | | | | | | | | | | |
| 14^{∗} | 1K-B | Formteil 1 | keine | AS 4700 F beidseitig | 2,3 | ++ | ++ | 26 | 47 | 55 | 60 | 85 |
| 15 | 1K-B | Formteil 2 | keine | AS 4700 F beidseitig | 2,3 | 0 | ++ | 20 | 43 | 51 | 57 | 77 |
| 16 | 1K-B | Formteil 4 | keine | AS 4700 F beidseitig | 2,3 | 0 | ++ | 20 | 43 | 51 | 57 | 84 |
| 17 | 1K-B | Formteil 7 | keine | AS 4700 F beidseitig | 2,3 | - | 0 | 7 | 34 | 44 | 51 | 81 |
| 18^{∗} | 1K-B | Formteil 8 | keine | AS 4700 F beidseitig | 2,3 | - | - | 2 | 29 | 39 | 47 | 84 |

### Beispielgruppe 2 (^{∗}: Vergleichsbeispiel):

| **Nr.** | **Aufbau** | **Komponente zur LIDAR-Seite** | **Komponente Zur Straße** | **Beschichtung** | **Dicke mm** | **Black Panel** | **Dunkel/ Dunkel** | **#Ty[%] (D65 10°)** | **T 400 bis 900** | **T 400 bis 1000** | **T 400 bis 1100** | **LIDAR-Signal bez. auf Luftwert in %** |
|---|---|---|---|---|---|---|---|---|---|---|---|---|
| 19^{∗} | 1K-D | Formteil 1 | PC3 | keine | 2,3 + 3,2 | ++ | ++ | 22 | 41 | 48 | 53 | 69 |
| 20 | 1K-D | Formteil 2 | PC3 | keine | 2,3 + 3,2 | 0 | ++ | 18 | 38 | 45 | 51 | 65 |
| 21 | 1K-D | Formteil 4 | PC3 | keine | 2,3 + 3,2 | - | ++ | 17 | 38 | 45 | 50 | 65 |
| 22 | 1K-D | Formteil 7 | PC3 | keine | 2,3 + 3,2 | - | 0 | 6 | 30 | 38 | 44 | 67 |
| 23^{∗} | 1K-D | Formteil 8 | PC3 | keine | 2,3 + 3,2 | - | - | 2 | 25 | 34 | 41 | 68 |
| | | | | | | | | | | | | |
| 24 | 1K-D | Formteil 1 | Formteil 1 | AS 4700 F beidseitig | 2,3 + 2,3 | - | 0 | 7 | 32 | 40 | 46 | 74 |
| 25 | 1K-D | Formteil 2 | Formteil 2 | AS 4700 F beidseitig | 2,3 + 2,3 | - | 0 | 5 | 30 | 38 | 44 | 65 |
| 26 | 1K-D | Formteil 4 | Formteil 4 | AS 4700 F beidseitig | 2,3 + 2,3 | - | 0 | 4 | 29 | 38 | 44 | 68 |
| | | | | | | | | | | | | |
| 27^{∗} | 1K+AG-B | Formteil 1 | PC3 | AS 4700 F beidseitig | 2,3 + 3,2 | ++ | ++ | 24 | 44 | 51 | 56 | 73 |
| 28 | 1K+AG-B | Formteil 2 | PC3 | AS 4700 F beidseitig | 2,3 + 3,2 | 0 | ++ | 18 | 40 | 48 | 54 | 69 |
| 29 | 1K+AG-B | Formteil 4 | PC3 | AS 4700 F beidseitig | 2,3 + 3,2 | 0 | ++ | 18 | 40 | 48 | 54 | 67 |
| 30 | 1K+AG-B | Formteil 7 | PC3 | AS 4700 F beidseitig | 2,3 + 3,2 | - | 0 | 7 | 32 | 41 | 47 | 67 |
| 31^{∗} | 1K+AG-B | Formteil 8 | PC3 | AS 4700 F beidseitig | 2,3 + 3,2 | - | - | 2 | 27 | 37 | 44 | 71 |

### Beispielgruppe 3 (^{∗}: Vergleichsbeispiel):

| **Nr.** | **Aufbau** | **Komponente zur LIDAR-Seite** | **Komponente Zur Straße** | **Beschichtung** | **Black Panel** | **Dunkel/ Dunkel** | **#Ty[%] (D65 10°)** | **T 400 bis 900** | **T 400 bis 1000** | **T 400 bis 1100** | **LIDAR-Signal bez. auf Luftwert in %** |
|---|---|---|---|---|---|---|---|---|---|---|---|
| 32^{∗} | 2K-F | PC2, 100 µm | PC 4 | AS 4700 F beidseitig | ++ | ++ | 32 | 61 | 67 | 70 | 85 |
| 33 | 2K-F | PC2, 175 µm | PC 4 | AS 4700 F beidseitig | 0 | ++ | 19 | 53 | 60 | 64 | 87 |
| 34 | 2K-F | PC2, 250 µm | PC 4 | AS 4700 F beidseitig | - | ++ | 9 | 46 | 54 | 59 | 86 |
| 35 | 2K-F | PC2,375 µm | PC 4 | AS 4700 F beidseitig | - | ++ | 5 | 41 | 50 | 56 | 81 |
| 36 | 2K-F | PC2, 500µm | PC 4 | AS 4700 F beidseitig | - | 0 | 2 | 37 | 47 | 53 | 85 |
| | | | | | | | | | | | |
| 37^{∗} | 2K-F | PC2, 100 µm | PC 4 | keine | ++ | ++ | 37 | 60 | 65 | 69 | 78 |
| 38 | 2K-F | PC2, 175 µm | PC 4 | keine | 0 | ++ | 18 | 50 | 57 | 62 | 78 |
| 39 | 2K-F | PC2, 250 µm | PC 4 | keine | - | ++ | 9 | 44 | 52 | 57 | 77 |
| 40 | 2K-F | PC2, 375 µm | PC 4 | keine | - | ++ | 5 | 41 | 49 | 55 | 77 |
| 41 | 2K-F | PC2, 500 µm | PC 4 | keine | - | 0 | 2 | 36 | 45 | 51 | 81 |

### Beispielgruppe 4 (*: Vergleichsbeispiel):

| **Nr.** | **Aufbau** | **Komponente zur LIDAR-Seite** | **Beschichtung** | **Black Panel** | **Dunkel/Dunkel** | **#Ty[%] (D65 10°)** | **T 400 bis 900** | **T 400 bis 1000** | **T 400 bis 1100** | **LIDAR-Signal bez. auf Luftwert in %** |
|---|---|---|---|---|---|---|---|---|---|---|
| 42^{∗} | 1K | PC-IR-1 | keine | ++ | ++ | 26,84 | 39,38 | 44,15 | 47,79 | 42,38 |
| 43^{∗} | 1K | PC-IR-2 | keine | 0 | ++ | 22,7 | 41,34 | 46,48 | 50,36 | 44,9 |
| 45^{∗} | 1K-B | PC-IR-1 | AS 4700 F beidseitig | ++ | ++ | 27,67 | 40,36 | 45,3 | 49,07 | 47,5 |
| 47^{∗} | 1K-B | PC-IR-3 | AS 4700 F beidseitig | - | - | 5,44 | 3,01 | 2,6 | 2,31 | 1,52 |
| 48^{∗} | 1K-B | PC-IR-4 | AS 4700 F beidseitig | 0 | ++ | 21,11 | 30,16 | 33,77 | 36,72 | 25,5 |

In den nachfolgenden IR-Absorber enthaltenden Polycarbonatrezepturen bildet Polycarbonat die Differenz zu 100 Gewichts-%. Angaben sind jeweils auf das Gesamtgewicht der Zusammensetzung bezogen.

PC-IR-1: Macrolex Red EG 0,004 Gew.-%; Macrolex Violet 3R 0,001 Gew.-%; Heliogen Blue K6911 0,0024 Gew.-%; Black Pearls 800 (Ruß) 0,0011 Gew.-%.

PC-IR-2: Oracet Yellow 180 0,0004 Gew.-%; Macrolex Red EG 0,0045 Gew.-%; Macrolex Green 5B 0,0046 Gew.-%; Black Pearls 800 (Ruß) 0,0009 Gew.-%.

PC-IR-3: LaB₆ (IR-Absorber; in Acrylatmatrix) 0,0135 Gew.-%; Lumogen IR765 (IR-Absorber; Quaterylen-Struktur) 0,0018 Gew.-%; Macrolex Blue RR 0,0032 Gew.-%; Macrolex Red EG 0,0031 Gew.-%; Black Pearls 800 (Ruß) 0,0014 Gew.-%.

PC-IR-4: Macrolex Red E2G 0,0015 Gew.-%; Macrolex Violet B 0,0012 Gew.-%; Heliogen Blue K6911 0,0010 Gew.-%; Black Pearls 800 (Ruß) 0,0022 Gew.-%.

## Patentansprüche

1. Sensor-System, umfassend
- eine LiDAR-Einheit mit einem Sender für Laserlicht mit einer Wellenlänge von 800 nm bis 1600 nm und einem Empfänger für Licht mit einer Wellenlänge von 800 nm bis 1600 nm;
- eine Kamera für sichtbares Licht mit einer Wellenlänge von 380 nm bis 780 nm und
- eine Abdeckung, welche so angeordnet ist, dass von der LiDAR-Einheit ausgesandtes und von ihr empfangenes IR-Licht und von der Kamera empfangenes sichtbares Licht durch die Abdeckung hindurch tritt, wobei die Abdeckung eine Farbstoffe enthaltende Schicht umfasst,
**dadurch gekennzeichnet, dass**
die Abdeckung eine Lichttransmission Ty im Bereich von 380 bis 780 nm von ≥ 3% bis ≤ 25%, bestimmt nach DIN ISO 13468-2:2006 (D65, 10°), aufweist,
die Abdeckung eine Transmission für Licht im Bereich von 380 nm bis 1100 nm von ≥ 40%, bestimmt nach DIN ISO 13468-2:2006 in Anlehnung an diese Norm, wobei der Wellenlängenbereich wie genannt verwendet wurde, aufweist,
die Abdeckung das LiDAR-Signal nur insoweit dämpft, als dass die Signalintensität von der LiDAR-Einheit ausgesandtem und von ihr wieder empfangenem IR-Licht bestimmt durch Reflexion an einer glatten, mit TiO₂-haltiger weißer Farbe bestrichenen Fläche im Abstand von 3.2 m ≥ 65% einer Referenz-Intensität, welche ohne die Abdeckung bestimmt wird, beträgt und dass
die Farbstoffe enthaltende Schicht eine thermoplastische Zusammensetzung mit den folgenden Komponenten umfasst:
i) mindestens 70 Gew.-%, bezogen auf das Gesamtgewicht der Zusammensetzung, eines transparenten thermoplastischen Polymers;
ii) mindestens ein grünes und/oder ein blaues Farbmittel;
iii) mindestens ein rotes und/oder violettes Farbmittel;
wobei das Produkt aus der Summe Gewichtsprozent-Anteile ,bezogen auf das Gesamtgewicht der Zusammensetzung, der Farbmittel ii) und iii) und der Dicke der Farbstoffe enthaltenden Schicht ≥ 0,041 Gew.-% mm bis ≤ 0,12 Gew.-% mm beträgt
und wobei die Zusammensetzung 0 bis ≤ 0,0005 Gewichts-%, bezogen auf das Gesamtgewicht der Zusammensetzung, an Infrarot-Absorbern enthält.

2. System gemäß Anspruch 1, wobei die Komponente ii) ausgewählt ist aus den Formeln (1), (2a-c), (3), (4a), (4b), (5), (6), (7) und/oder (8) und die Komponente iii) ausgewählt ist aus den Formeln (9), (10), (11), (12), (13), (14a), (14b) und/oder (15): 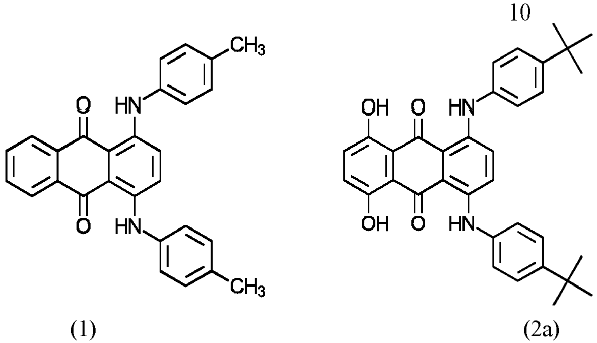 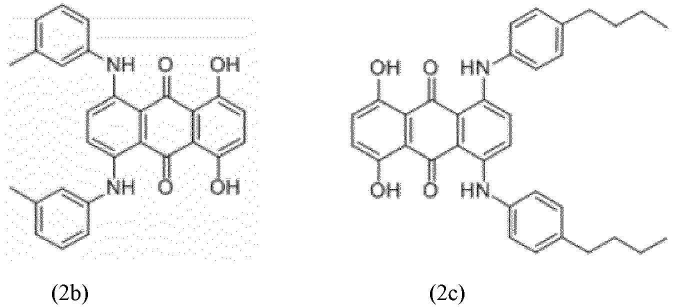 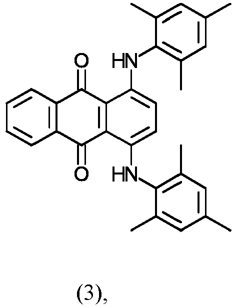 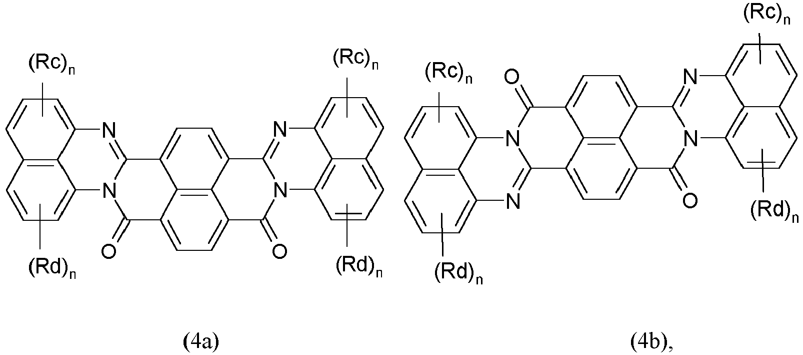
wobei
Rc und Rd unabhängig voneinander für einen linearen oder verzweigten Alkylrest oder Halogen stehen,
n unabhängig vom jeweiligen R für eine natürliche Zahl zwischen 0 und 3 steht, 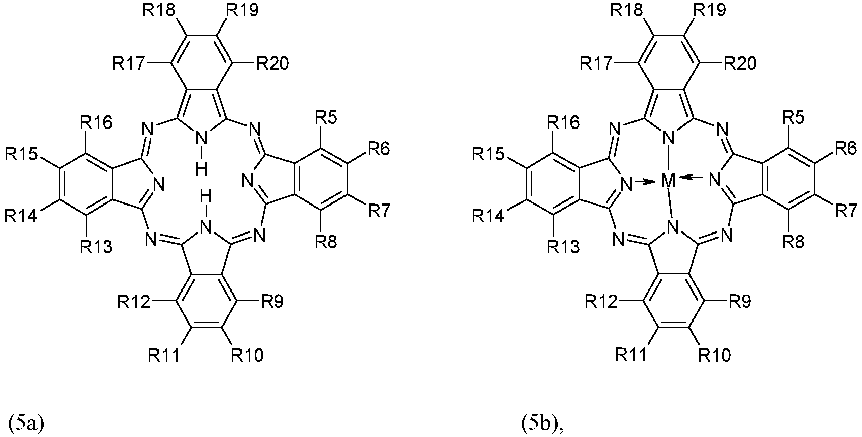
wobei die Reste R(5-20) unabhängig voneinander für Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN stehen und M Aluminium, Nickel, Cobalt, Eisen, Zink, Kupfer oder Mangan ist, 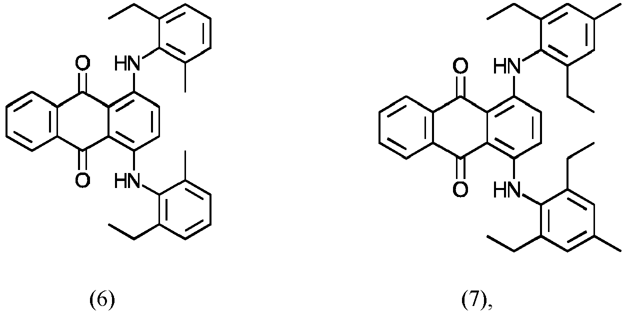 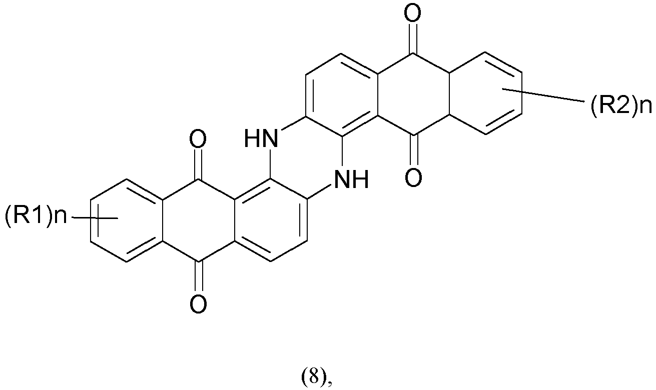
wobei
R1 und R2 unabhängig voneinander für einen linearen oder verzweigten Alkylrest oder Halogen stehen,
n für eine natürliche Zahl zwischen 0 und 4 steht, 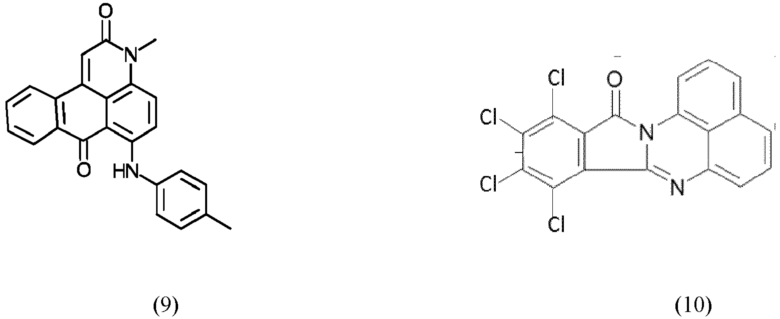 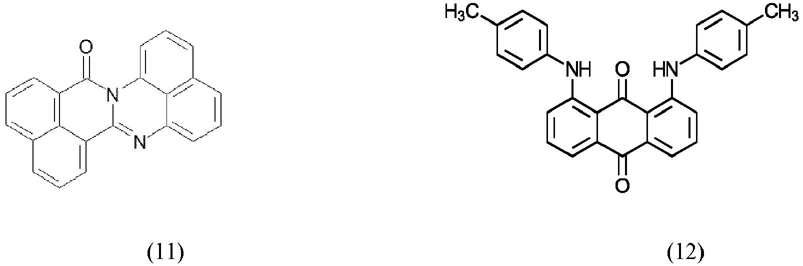 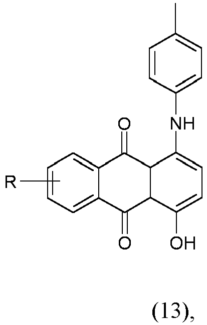
wobei R ausgewählt ist aus der Gruppe, die aus H und p-Methylphenylamin-Rest besteht, 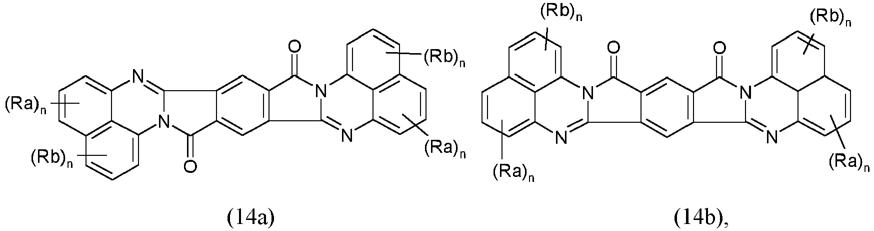
wobei
Ra und Rb unabhängig voneinander für einen linearen oder verzweigten Alkylrest oder Halogen stehen,
n unabhängig vom jeweiligen R für eine natürliche Zahl zwischen 0 und 3 steht,

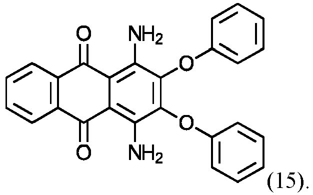

3. System gemäß Anspruch 1 oder 2, wobei die thermoplastische Zusammensetzung der Farbstoffe enthaltende Schicht die folgenden Komponenten umfasst:
- mindestens 99 Gew.-%, bezogen auf das Gesamtgewicht der Zusammensetzung, aromatisches Polycarbonat mit einer Schmelzvolumenrate MVR von 15 bis 20 cm³/(10 min), bestimmt nach ISO 1133-1:2012-03 (300°C, 1,2 kg);
- Farbmittel der Formel (2a), (2b) und/oder (2c);
- Farbmittel der Formel (5b) mit M = Cu und R(5-20) = H;
- Farbmittel der Formel (10);
wobei die Summe der insgesamt eingesetzten Farbmittel ≥ 0,017 Gew.-% bis ≤ 0,057 Gew.-%, bezogen auf das Gesamtgewicht der Zusammensetzung, beträgt.

4. System gemäß einem der Ansprüche 1 bis 3, wobei die thermoplastische Zusammensetzung der Farbstoffe enthaltende Schicht einen gelben und/oder orangefarbenen Farbstoff der Formeln (16), (17), (18), (19), (20) oder eine Mischung aus mindestens zwei hiervon umfasst:

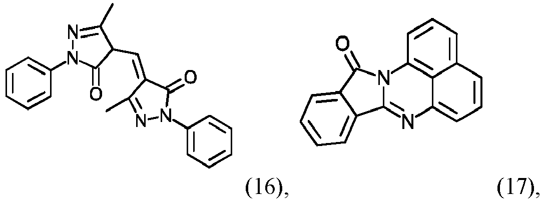

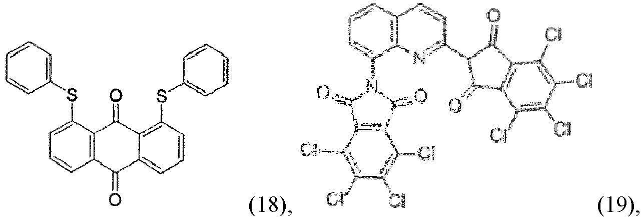

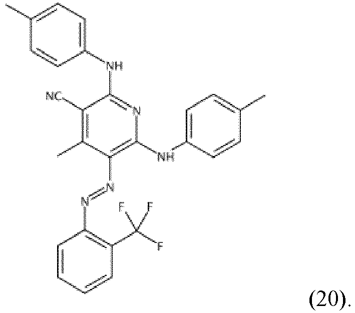

5. System gemäß einem der vorhergehenden Ansprüche, wobei die Kamera keinen oder einen eingeschränkten Infrarot-Filter aufweist.

6. System gemäß einem der vorhergehenden Ansprüche, wobei die Abdeckung weiterhin eine Decklackschicht aufweist.

7. System gemäß Anspruch 6, wobei die Decklackschicht ein organo-modifiziertes Silan oder dessen Reaktionsprodukt enthält.

8. System gemäß Anspruch 6 oder 7, wobei zwischen der Decklackschicht und der Farbstoffe enthaltenden Schicht eine Haftvermittlerschicht vorliegt.

9. System gemäß einem der Ansprüche 6 bis 8, wobei der in der Decklackschicht verwendete Decklack ein mittels UV-Strahlung härtender Decklack ist.

10. System gemäß einem der Ansprüche 6 bis 9, wobei auf der der Decklackschicht gegenüberliegenden Seite der Farbstoffe enthaltenden Schicht eine weitere Schicht vorliegt.

11. System gemäß Anspruch 10, wobei die weitere Schicht eine Antireflexschicht, eine Antibeschlagschicht, eine Antistaubschicht, eine die Medienbeständigkeit verbessernde Schicht, eine die Kratzfestigkeit verbessernde Schicht oder deren Kombination ist.

12. System gemäß einem der vorhergehenden Ansprüche, wobei in der Abdeckung die Farbstoffe enthaltende Schicht eine Dicke von ≥ 0,15 mm bis ≤ 5 mm aufweist.

13. System gemäß einem der vorhergehenden Ansprüche, wobei die Abdeckung eine Mehrzahl von Farbstoffe enthaltende Schichten aufweist, welche gleich oder verschieden sein können.

14. System gemäß einem der vorhergehenden Ansprüche, wobei die Abdeckung weiterhin eine Schicht eines aromatischen Polycarbonats aufweist, welches keine grüne, blaue, rote und/oder violette Farbmittel enthält.

15. Fahrzeug, umfassend ein System gemäß einem der vorhergehenden Ansprüche.

## Claims

1. Sensor system comprising
- a LiDAR unit having a transmitter for laser light having a wavelength of 800 nm to 1600 nm and a receiver for light having a wavelength of 800 nm to 1600 nm;
- a camera for visible light having a wavelength of 380 nm to 780 nm and
- a cover arranged such that IR light transmitted by the LiDAR unit and received thereby and visible light received by the camera passes through the cover, wherein the cover comprises a layer containing dyes,
**characterized in that**
the cover has a light transmission Ty in the range from 380 to 780 nm of ≥ 3% to ≤ 25% determined according to DIN ISO 13468-2:2006 (D65, 10°),
the cover has a transmission for light in the range of 380 nm to 1100 nm of ≥ 40% determined according to DIN ISO 13468-2:2006, analogously with this standard, wherein the aforementioned wavelength range was used,
the cover attenuates the LiDAR signal only to the extent that the signal intensity of the IR light transmitted by the LiDAR unit and re-received thereby, determined by reflection from a smooth surface painted with TiO₂-containing white paint at a distance of 3.2 m, is ≥ 65% of a reference intensity determined without the cover and **in that**
the layer containing dyes comprises a thermoplastic composition comprising the following components:
i) at least 70 wt% based on the total weight of the composition of a transparent thermoplastic polymer;
ii) at least one green and/or blue colourant;
iii) at least one red and/or violet colourant;
wherein the product of the sum of the weight per cent fractions, based on the total weight of the composition, of the colourants ii) and iii) and the thickness of the layer containing dyes is ≥ 0.041 wt% mm to ≤ 0.12 wt% mm and wherein the composition contains 0 to ≤ 0.0005 wt% based on the total weight of the composition of infrared absorbers.

2. System according to Claim 1, wherein the component ii) is selected from the formulae (1), (2a-c), (3), (4a), (4b), (5), (6), (7) and/or (8) and the component iii) is selected from the formulae (9), (10), (11), (12), (13), (14a), (14b) and/or (15): 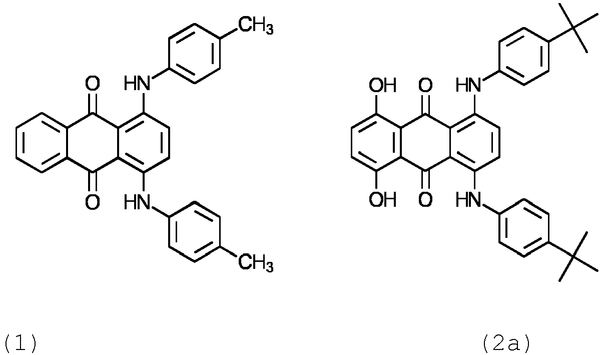 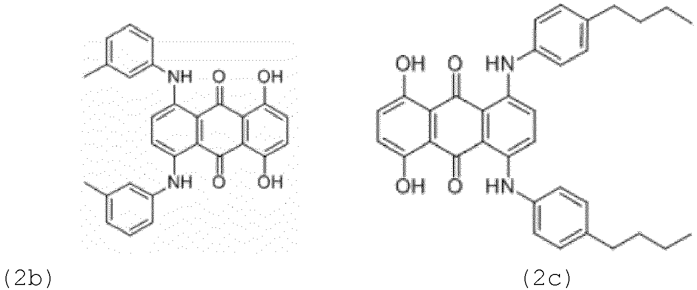 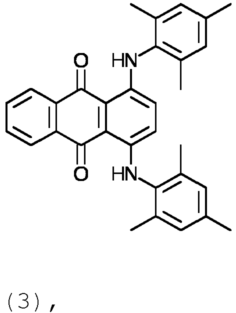 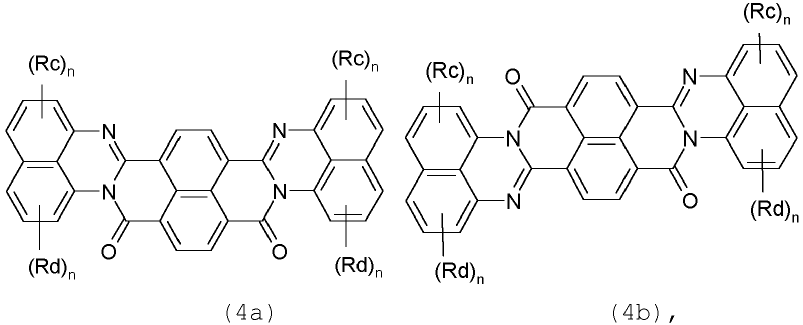
wherein
Rc and Rd independently of one another represent a linear or branched alkyl radical or halogen,
n independently of the respective R represents a natural number between 0 and 3, 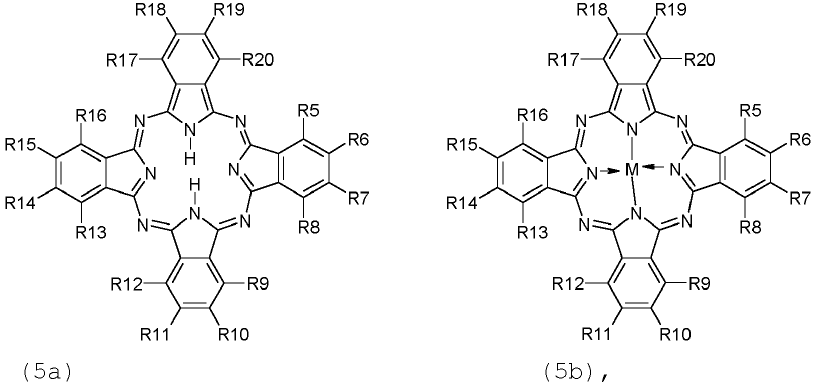
where the radicals R(5-20) independently of one another represent hydrogen, methyl, ethyl, propyl, isopropyl, butyl, isobutyl, tert-butyl, pentyl, neopentyl, hexyl, thexyl, fluoro, chloro, bromo, sulfone or CN and M is aluminium, nickel, cobalt, iron, zinc, copper or manganese, 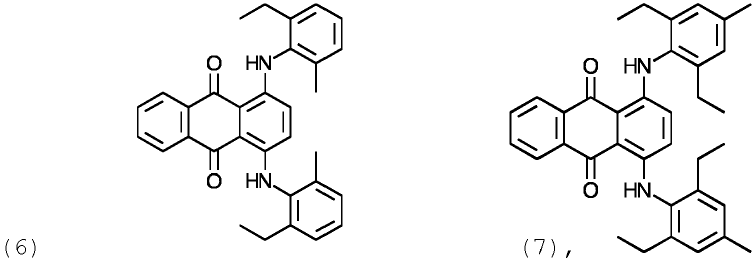 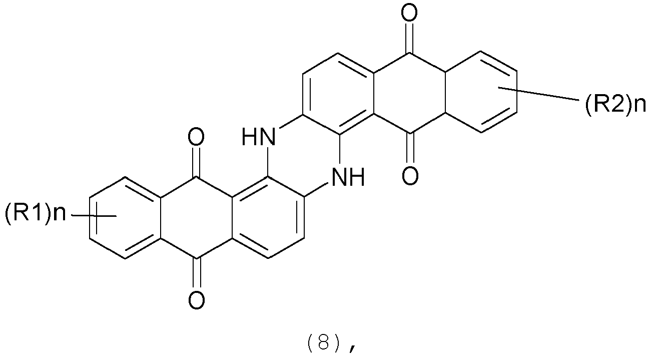
wherein
R1 and R2 independently of one another represent a linear or branched alkyl radical or halogen,
n is a natural number between 0 and 4, 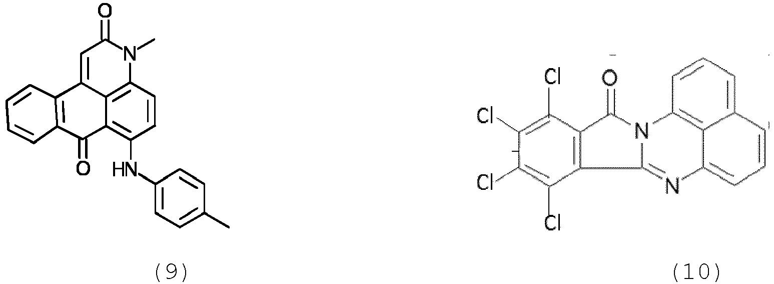 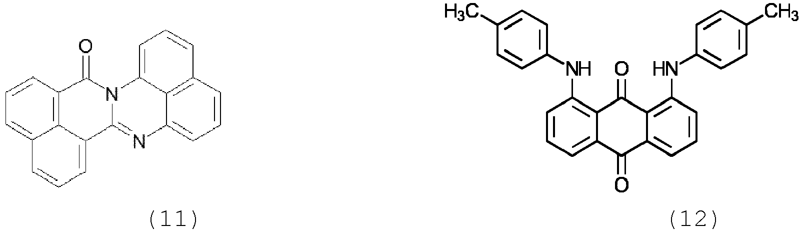 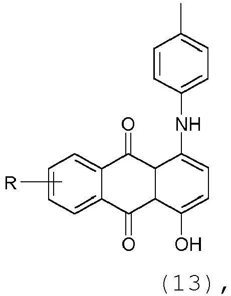
wherein R is selected from the group consisting of H and p-methylphenylamine radical, 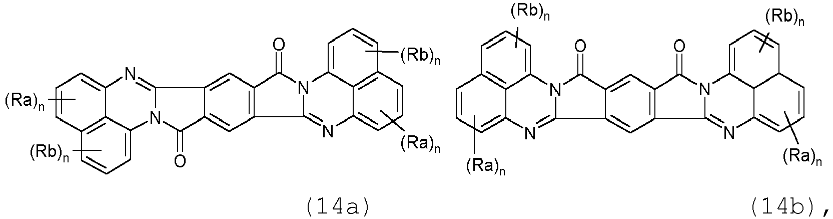
wherein
Ra and Rb independently of one another represent a linear or branched alkyl radical or halogen,
n independently of the respective R represents a natural number between 0 and 3,

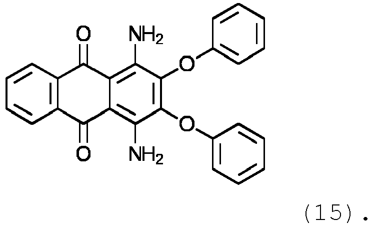

3. System according to Claim 1 or 2, wherein the thermoplastic composition of the layer containing dyes comprises the following components:
- at least 99 wt% based on the total weight of the composition of aromatic polycarbonate having a melt volume rate MVR of 15 to 20 cm³/(10 min) determined according to ISO 1133-1:2012-03 (300°C, 1.2 kg);
- colourants of formula (2a), (2b) and/or (2c);
- colourants of formula (5b) where M = Cu and R(5-20) = H;
- colourants of formula (10);
wherein the sum of the colourants employed in total is ≥ 0.017 wt% to ≤ 0.057 wt% based on the total weight of the composition.

4. System according to any of Claims 1 to 3, wherein the thermoplastic composition of the layer containing dyes comprises a yellow and/or orange-coloured dye of formulae (16), (17), (18), (19), (20) or a mixture of at least two thereof:

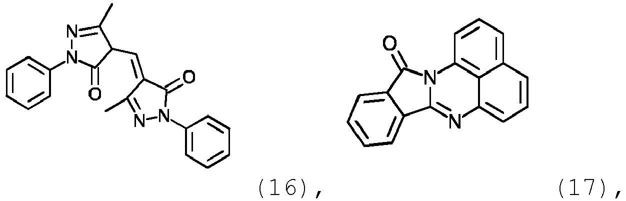

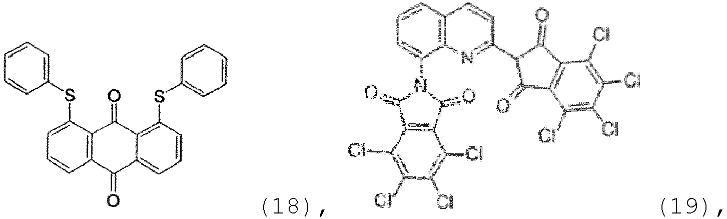

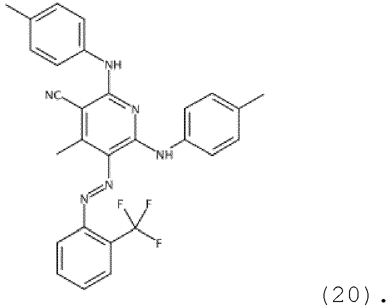

5. System according to any of the preceding claims, wherein the camera has a limited infrared filter, if any.

6. System according to any of the preceding claims, wherein the cover further comprises a topcoat layer.

7. System according to Claim 6, wherein the topcoat layer contains an organomodified silane or a reaction product thereof.

8. System according to Claim 6 or 7, wherein an adhesion promoter layer is present between the topcoat layer and the layer containing dyes.

9. System according to any of Claims 6 to 8, wherein the topcoat used in the topcoat layer is a UV-curable topcoat.

10. System according to any of Claims 6 to 9, wherein a further layer is present on the side of the layer containing dyes that is opposite the topcoat layer.

11. System according to Claim 10, wherein the further layer is an antireflection layer, an anti-condensation layer, an anti-dust layer, a layer improving media resistance or a layer improving scratch resistance or a combination thereof.

12. System according to any of the preceding claims, wherein in the cover the layer containing dyes has a thickness of ≥ 0.15 mm to ≤ 5 mm.

13. System according to any of the preceding claims, wherein the cover comprises a plurality of layers containing dyes which may be identical or different.

14. System according to any of the preceding claims, wherein the cover further comprises a layer of an aromatic polycarbonate which does not contain green, blue, red and/or violet colourants.

15. Vehicle comprising a system according to any of the preceding claims.

## Revendications

1. Système de capteur, comprenant
- une unité LiDAR pourvue d'un émetteur pour une lumière laser d'une longueur d'onde de 800 nm à 1600 nm et d'un récepteur pour de la lumière d'une longueur d'onde de 800 nm à 1600 nm ;
- une caméra pour de la lumière visible d'une longueur d'onde de 380 nm à 780 nm et
- un recouvrement qui est agencé de manière telle que la lumière IR émise par l'unité LiDAR et reçue par celle-ci et la lumière visible reçue par la caméra traverse le recouvrement, le recouvrement comprenant une couche contenant des colorants,
**caractérisé en ce que** le recouvrement présente une transmission de lumière Ty dans la plage de 380 à 780 nm de ≥ 3% à ≤ 25%, déterminée selon la norme DIN ISO 13468-2:2006 (D65, 10°),
le recouvrement présente une transmission pour la lumière dans la plage de 380 nm à 1100 nm de ≥ 40%, déterminée selon la norme DIN ISO 13468-2:2006, en référence à cette norme, la plage de longueurs d'onde telle que mentionnée ayant été utilisée,
le recouvrement n'atténue le signal LiDAR que dans une mesure telle que l'intensité du signal de la lumière IR émise et de nouveau reçue par l'unité LiDAR, déterminée par réflexion au niveau d'une surface lisse enduite d'une peinture blanche contenant du TiO₂ à une distance de 3,2 m, est ≥ 65% d'une intensité de référence, qui est déterminée sans recouvrement et **en ce que** la couche contenant des colorants comprend une composition thermoplastique présentant les composants suivants :
i) au moins 70% en poids, par rapport au poids total de la composition, d'un polymère thermoplastique transparent ;
ii) au moins un colorant vert et/ou un colorant bleu ;
iii) au moins un colorant rouge et/ou violet ;
le produit de la somme des proportions en pourcentage en poids, par rapport au poids total de la composition, des colorants ii) et iii) et de l'épaisseur de la couche contenant des colorants étant ≥ 0,041% en poids.mm à ≤ 0,12% en poids.mm et
la composition contenant 0 à ≤ 0,0005% en poids, par rapport au poids total de la composition, d'absorbants des infrarouges.

2. Système selon la revendication 1, le composant ii) étant choisi parmi les formules (1), (2a-c), (3), (4a), (4b), (5), (6), (7) et/ou (8) et le composant iii) étant choisi parmi les formules (9), (10), (11), (12), (13), (14a), (14b) et/ou (15) : 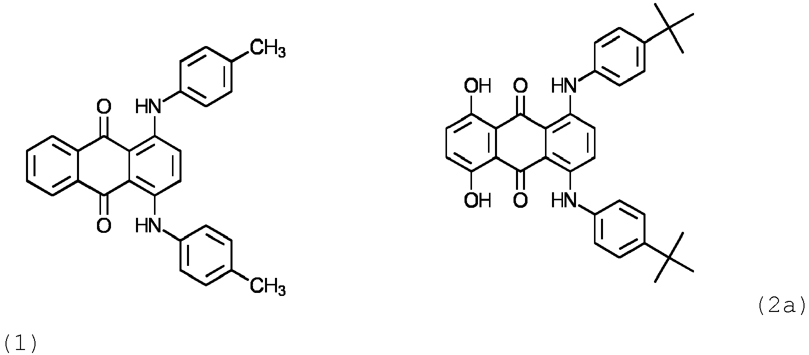 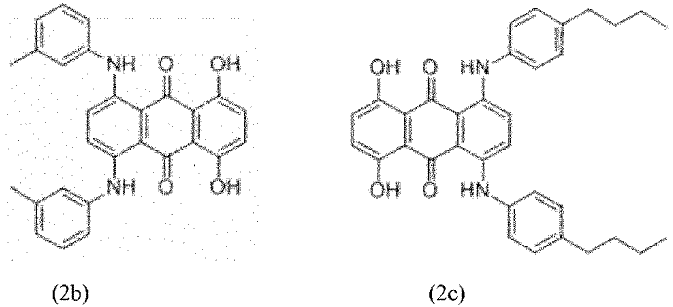 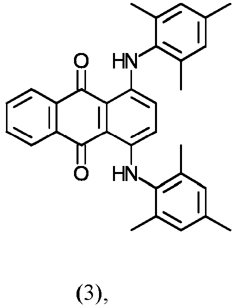 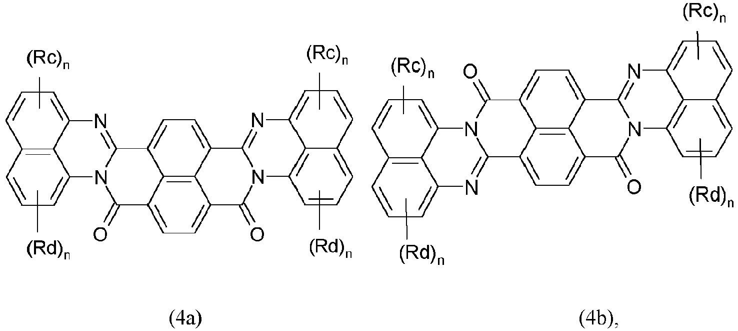
Rc et Rd représentant, indépendamment l'un de l'autre, un radical alkyle linéaire ou ramifié ou halogène,
n représentant, indépendamment du R respectif, un nombre naturel entre 0 et 3, 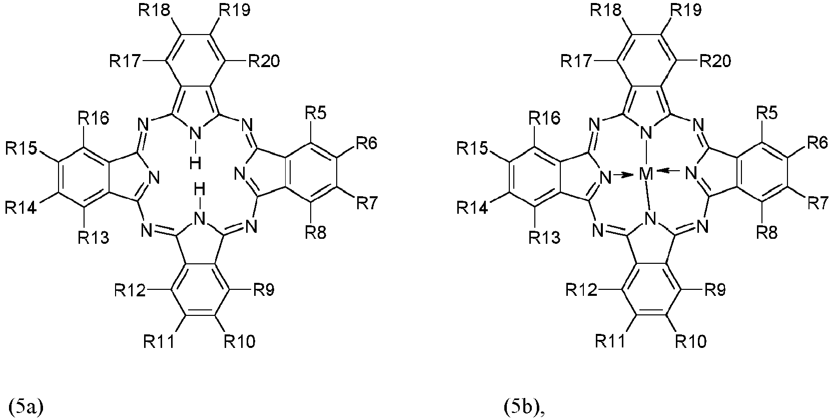
les radicaux R(5-20) représentant, indépendamment les uns des autres, hydrogène, méthyle, éthyle, propyle, isopropyle, butyle, isobutyle, tert-butyle, pentyle, néopentyle, hexyle, thexyle, fluor, chlore, brome, sulfone, CN et M représentant aluminium, nickel, cobalt, fer, zinc, cuivre ou manganèse, 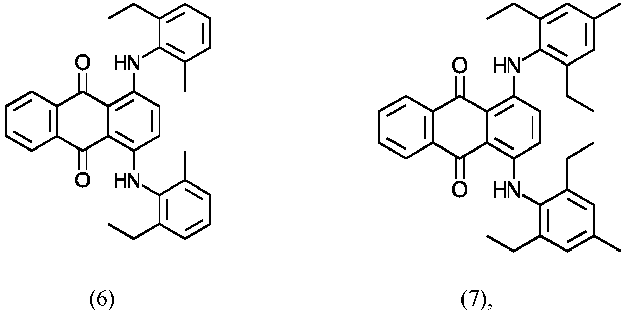 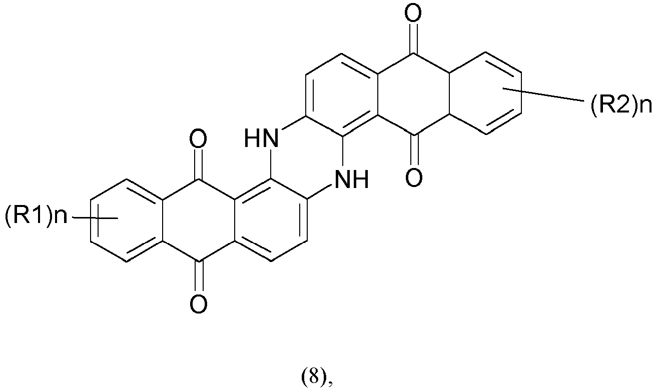
R1 et R2 représentant, indépendamment l'un de l'autre, un radical alkyle linéaire ou ramifié ou halogène,
n représentant un nombre naturel entre 0 et 4, 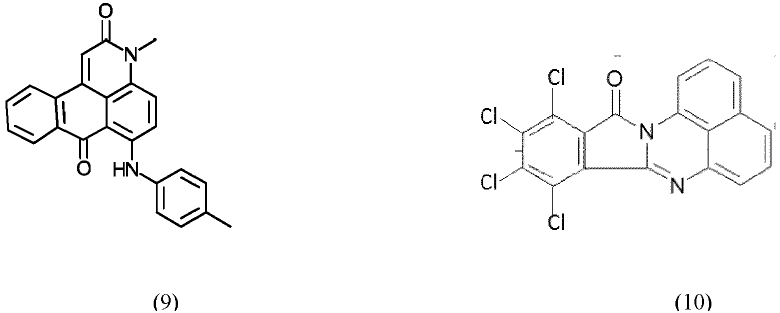 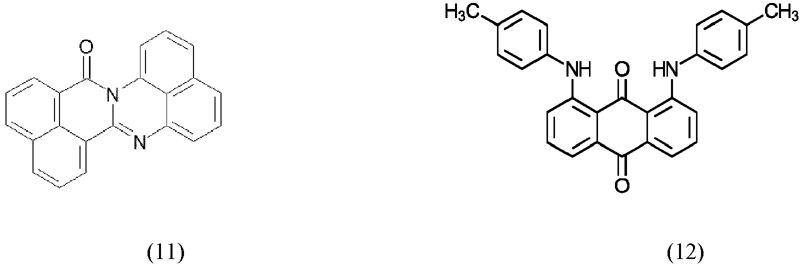 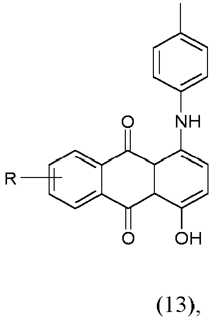
R étant choisi dans le groupe constitué par H et le radical p-méthylphénylamine, 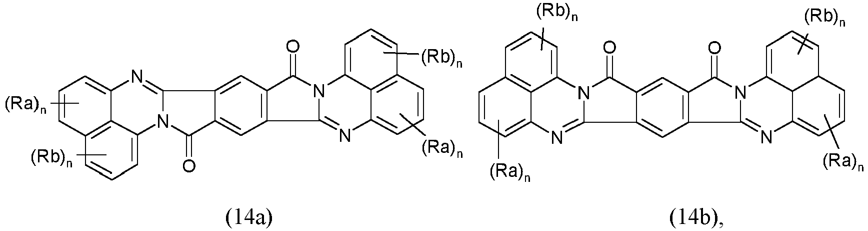
Ra et Rb représentant, indépendamment l'un de l'autre, un radical alkyle linéaire ou ramifié ou halogène,
n représentant, indépendamment du R respectif, un nombre naturel entre 0 et 3,

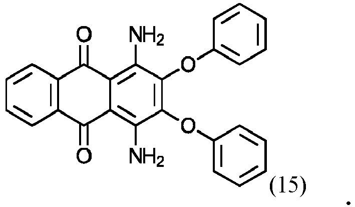

3. Système selon la revendication 1 ou 2, la composition thermoplastique de la couche contenant des colorants comprenant les composants suivants :
- au moins 99*%* en poids, par rapport au poids total de la composition, de polycarbonate aromatique présentant un indice de fluidité à chaud en volume MVR de 15 à 20 cm³/(10 min), déterminé selon la norme ISO 1133-1:2012-03 (300°C, 1,2 kg) ;
- des colorants de formule (2a), (2b) et/ou (2c) ;
- des colorants de formule (5b) où M = Cu et R(5-20) = H ;
- des colorants de formule (10) ;
la somme des colorants utilisés au total étant ≥ 0,017*%* en poids à ≤ 0,057*%* en poids, par rapport au poids total de la composition.

4. Système selon l'une quelconque des revendications 1 à 3, la composition thermoplastique de la couche contenant des colorants comprenant un colorant jaune et/ou orangé des formules (16), (17), (18), (19), (20) ou un mélange d'au moins deux de ceux-ci :

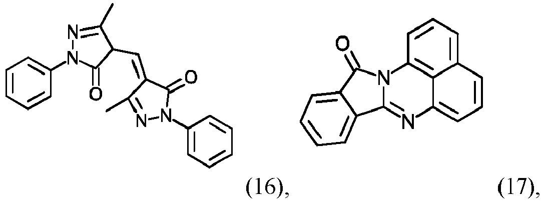

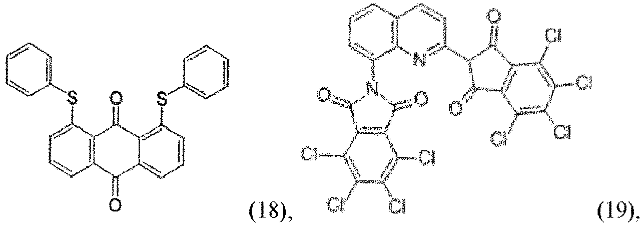

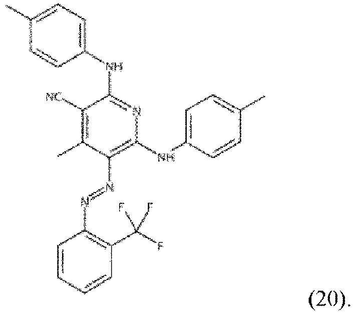

5. Système selon l'une quelconque des revendications précédentes, la caméra ne présentant pas de filtre infrarouge ou présentant un filtre infrarouge limité.

6. Système selon l'une quelconque des revendications précédentes, le recouvrement présentant en outre une couche de vernis de recouvrement.

7. Système selon la revendication 6, la couche de vernis de recouvrement contenant un silane organomodifié ou son produit de réaction.

8. Système selon la revendication 6 ou 7, une couche de promoteur d'adhérence étant située entre la couche de vernis de recouvrement et la couche contenant des colorants.

9. Système selon l'une quelconque des revendications 6 à 8, le vernis de recouvrement utilisé dans la couche de vernis de recouvrement étant un vernis de recouvrement durcissant au moyen d'un rayonnement UV.

10. Système selon l'une quelconque des revendications 6 à 9, une autre couche étant située sur la face opposée à la couche de vernis de recouvrement de la couche contenant des colorants.

11. Système selon la revendication 10, l'autre couche étant une couche antireflet, une couche antibuée, une couche antipoussière, une couche améliorant la résistance aux fluides, une couche améliorant la résistance aux rayures ou leur combinaison.

12. Système selon l'une quelconque des revendications précédentes, la couche contenant des colorants dans le recouvrement présentant une épaisseur de ≥ 0,15 mm à ≤ 5 mm.

13. Système selon l'une quelconque des revendications précédentes, le recouvrement présentant une pluralité de couches contenant des colorants, qui peuvent être identiques ou différentes.

14. Système selon l'une quelconque des revendications précédentes, le recouvrement présentant en plus une couche d'un polycarbonate aromatique qui ne contient pas de colorant vert, bleu, rouge et/ou violet.

15. Véhicule, comprenant un système selon l'une quelconque des revendications précédentes.
